# EUROPEAN PATENT SPECIFICATION

(11) **EP 2 053 929 B1**
(45) Date of publication and mention of the grant of the patent: **26.05.2010**
(21) Application number: 06761864.5
(22) Date of filing: 17.08.2006
(51) Int. Cl.: A23L 1/00, A23L 1/22, A23G 3/54, A23G 4/20

(54) **RESIN ENCAPSULATED HIGH INTENSITY SWEETENER**
HARZVERKAPSELTER INTENSIVSÜSSTOFF
ÉDULCORANT DE GRANDE INTENSITÉ ENCAPSULÉ DANS UNE RÉSINE

(43) Date of publication of application: 06.05.2009
(73) Proprietor: Gumlink A/S, 7100 Vejle (DK)
(72) Inventor: THORENGAARD, Bitten, 7120 Vejle Øst (DK)
(74) Representative: Plougmann & Vingtoft A/S
(86) International application number: PCT/DK2006/000453
(87) International publication number: WO 2008/019685

(56) References cited:
- EP-A- 0 372 695
- EP-A- 0 401 954
- WO-A-2004/004478
- WO-A-2004/004479
- WO-A-2006/002622
- US-A- 5 266 335
- US-A1- 2005 112 236

## Description

The present invention relates to confectionary compositions comprising one or more encapsulation delivery systems containing high intensity sweeteners and natural resins. The invention furthermore relates to the encapsulation delivery system as such as well as to methods of preparing the encapsulation delivery system and the confectionary composition.

### TECHNICAL BACKGROUND OF THE INVENTION

High intensity sweeteners have many important functions in confectionary products. One of these functions is that high intensity sweeteners may enhance the perception of other ingredients in the confectionary product. In particular, if high intensity sweeteners are present together with flavouring agents, the perception of the flavouring agents may be enhanced by the presence of high intensity sweeteners.

WO 2006/002622 discloses a chewing gum tablet containing a confectionery base, at least one confectionery ingredient and high-intensity sweetening agents. In order to provide longer lasting sweetness and to control the release of at least a portion of the sweetener, the high-intensity sweetener is encapsulated using a chewing gum component, such as a resinous compound. Resinous polymer compounds which advantageously can be used in this process for preparing this chewing gum include polymers which can be degraded physically, chemically or enzymatically and contribute to obtain the desired masticatory properties and are natural rosin esters including partially hydrogenated rosins and glycerol esters of polymerised rosins. The chewing gum tablet comprises an insoluble part containing the resinous compounds representing 10 to 90 % by weight (page 16, lines 6-14). Also, 5 to 35 % softeners are present in the chewing gum formulation. High-intensity sweeteners include sucralose, aspartame, twinsweet, salts of acesulfame, alitame, saccharin and its salts, neotame, cyclamic acid and its salts, glycyrrhizin and salts thereof, dihydrochalcones, thaumatin, monellin, stevioside and the like, alone or in combination. The chewing gum also contains active substances in the form of agents adjusting the pH in the oral cavity including acids, such as adipic acid, succinic acid, fumaric acid, or salts thereof or salts of citric acid, tartaric acid, malic acid, acetic acid, lactic acid, phosphoric acid and glutaric acid.

In relation to various chewable confectionary products, however, the release of high intensity sweeteners and other ingredients such as flavouring agents does not strictly follow the same release profile upon chewing. Usually high intensity sweeteners tend to release rather quickly from the confectionary product upon chewing, while certain other ingredients such as flavouring agents tend to retain in the confectionary product for a longer period. Consequently, if high intensity sweeteners are released from the confectionary product rather quickly, the perception of the other ingredients in the confectionary base may be significantly reduced.

Following this observation several attempts have been suggested in the prior art in order to delay the release of high intensity sweeteners in chewable confectionary products. Delayed release of high intensity sweeteners has traditionally been accomplished by a method of encapsulating the high intensity sweeteners into an encapsulation material, and subsequently incorporating the encapsulation material in the chewable confectionary product as discrete encapsulations for delivery of the high intensity sweeteners upon chewing.

Besides the function of delaying the release of high intensity sweeteners, another advantage of encapsulating high intensity sweeteners is that it may buffer the high intensity sweeteners from other ingredients, and vice versa, which may be helpful in situations where the high intensity sweeteners and the ingredients may interact or react together in a manner that degrades the product if the high intensity sweetener is not encapsulated.

A limited number of different encapsulation materials, such as polyvinyl acetate (PVAc) or zein, have been suggested in the prior art. Despite the effects reported in the prior art, several problems arise in relation to the applicability of these encapsulation materials in chewable confectionary products such as chewing gums.

Since an encapsulation material has specific properties, the choice of encapsulation material may influence the texture or mouth feel of the final confectionary product. To obtain a desired texture or mouth feel of the final confectionary product, one possibility is to modify the components of the confectionary base system or to modify the content of other confectionary ingredients. Since the encapsulation material forms part of the final confectionary product, the final texture or mouth feel of the confectionary product is dependent on the choice of encapsulation material. Therefore it is desired to have encapsulation materials suited for the desired texture or mouth feel of the final confectionary product. In addition, it is desired to have encapsulation materials, which require reduced modification of the confectionary base system or other confectionary ingredients in order to obtain the desired texture or mouth feel of the final product.

Similarly, the incorporation of different sensation ingredients such as taste ingredients in the final confectionary product may highly interact with the confectionary base system or the other confectionary ingredients. For example, the addition of certain taste ingredients such as flavors may require modification of the confectionary base system or confectionary ingredients in order to achieve the desired final product. In turn, since the encapsulation material forms part of the final confectionary product, the final properties of the confectionary product are dependent on the choice of encapsulation material. Therefore it is desired to have encapsulation materials suited for the desired properties of the final confectionary product. In addition, it is desired to have encapsulation materials which require reduced modification of the confectionary base system or other confectionary ingredients in order to obtain the desired sensation of the final product.

Furthermore, the encapsulation materials of the prior art limit the opportunity of designing confectionary products having customer acceptable release profiles of high intensity sweetener. In some applications it may be desired to have a rather delayed release of high intensity sweeteners in the confectionary product while in some other applications it may be desired to have another release profile of high intensity sweeteners dependent on the customer needs. Consequently, there is a need for alternative encapsulation materials, in particular to be able to control the release of high intensity sweeteners in accordance with customer demands.

Additionally, the use of high intensity sweeteners in confectionary products may compromise the shelf life of the confectionary product if special precautions are not taken. High intensity sweeteners may reduce the stability of the confectionary product, e.g. by altering properties of the confectionary base, the coating (if the confectionery is coated), or of confectionary ingredients such as flavours.

### SUMMARY OF THE INVENTION

Accordingly, in one aspect of the present invention there is provided a chewable confectionary composition having modified release. The composition comprises a confectionary base, at least one confectionary ingredient, and one or more encapsulation delivery systems comprising at least one high intensity sweetener and at least one natural resin.

Another aspect of the present invention relates to the encapsulation delivery system as such. The encapsulation delivery system comprises at least one high intensity sweetener and at least one natural resin.

Yet other aspect of the invention relates to methods for preparing the encapsulation delivery system and the confectionary composition.

### BRIEF DESCRIPTION OF THE FIGURES

In the following some embodiments of the present invention will be described with reference to the figures, wherein
Figure 1(A) is a schematic illustration of particles of an encapsulation delivery system and
Figure 1(B) is a schematic illustration of a cross section of a confectionary composition comprising particles of an encapsulation delivery system;

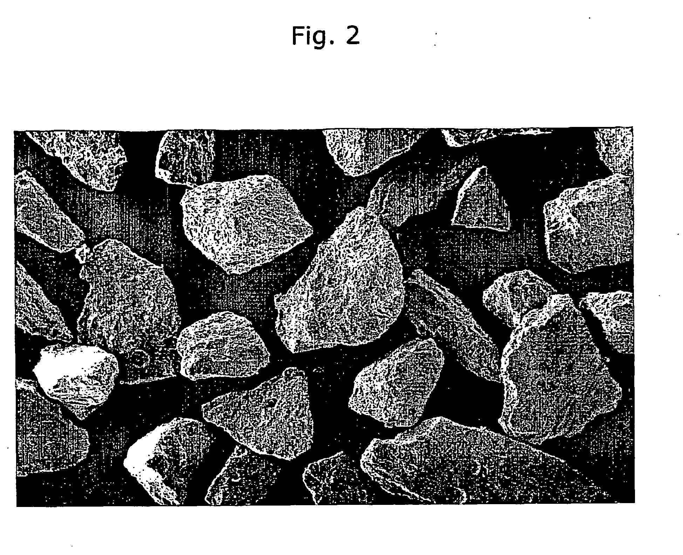

Figure 2 shows a Scanning Electron Microscopy picture of particles of an encapsulation delivery system;
Figure 3 shows *in vivo* chew out studies of Acesulfame K release. The encapsulation system consisted of Polyterpen resin Piccolyte^{®}C115 and 10% elastomer;
Figure 4 shows *in vivo* chew out studies of Acesulfame K release. The encapsulation delivery system consisted of polyterpene resin in combination with PVAc, microcrystalline wax and elastomers;
Figure 5 shows sensory evaluation (Time Intensity test) of sweetness intensity of Acesulfame K. Encapsulation delivery system 410 consisted of PVAc alone (high and low molecular weight) and microcrystalline wax and encapsulation delivery system 415 consisted of a combination of PVAc (high and low molecular weight) with polyterpene resin and microcrystalline wax;
Figure 6 shows sensory evaluation (Time Intensity test) of sweetness intensity of Acesulfame K. Encapsulation delivery system 424 consisted of PVAc alone (high and low molecular weight) together with elastomer and microcrystalline wax and encapsulation delivery system 425 consisted of PVAc (high and low molecular weight) together with polyterpene resin and microcrystalline wax;
Figure 7 shows sensory evaluation (Time Intensity test) of sweetness intensity of Acesulfame K. Encapsulation delivery system 358 consisted of polyterpene resin together with elastomer and microcrystalline wax and encapsulation delivery system 381 consisted of PVAc (high and low molecular weight) together with polyterpene resin, elastomer and microcrystalline wax;

### DETAILED DESCRIPTION OF THE INVENTION

The present invention is based on the finding that a chewable confectionary composition, which comprises one or more encapsulation delivery systems comprising at least one high intensity sweetener and at least one natural resin, has a modified release of high intensity sweetener when the confectionary composition is chewed.

An aspect of the invention relates to a chewable confectionary composition having modified release, said composition comprising a confectionary base, at least one confectionary ingredient, and one or more encapsulation delivery systems comprising at least one high intensity sweetener and at least one natural resin.

In a preferred embodiment of the invention, the one or more encapsulation delivery systems comprise an amount of the at least one natural resin in the range of 5-100% by weight, such as in the range of 10-90% by weight, preferably in the range of 20-80% by weight, and even more preferred in the range of 40-60% by weight.

It is envisioned that the one or more encapsulation delivery systems may comprise an amount of the at least one natural resin in the range of 10-100% by weight, such as in the range of 15-100% by weight, preferably in the range of 20-100% by weight, such as range of 25-100% by weight, range of 30-100% by weight, in the range of 40-100% by weight, or In the range of 60-100% by weight.

Alternatively, the one or more encapsulation delivery systems may comprise an amount of the at least one natural resin in the range of 5-60% by weight, such as in the range of 5-40% by weight, e.g. in the range of 5-20% by weight.

In a preferred embodiment of the invention, the one or more encapsulation delivery systems comprise a total amount of natural resin in the range of 5-100% by weight, such as in the range of 10-90% by weight, preferably in the range of 20-80% by weight, and even more preferred in the range of 40-60% by weight.

For example that the one or more encapsulation delivery systems may comprise a total amount of natural resin in the range of 10-100% by weight, such as in the range of 15-100% by weight, preferably in the range of 20-100% by weight, such as in the range of 40-100% by weight, or in the range of 60-100% by weight.

Alternatively, the one or more encapsulation delivery systems may comprise a total amount of natural resin in the range of 5-60% by weight, such as in the range of 5-40% by weight, e.g. in the range of 5-20% by weight.

The at least one natural resin comprised in the one or more encapsulation delivery systems may comprise at least one polyterpene resin. Alternatively, the at least one natural resin may comprise at least one hydrogenated resin. Also, the at least one natural resin may comprise at least one polymerised resin. It is also envisioned that the natural resin may comprise mixtures of natural resins, such as at least one hydrogenated resin and at least one polyterpene resin; at least one polymerised resin and at least one polyterpene resin; at least one hydrogenated resin and at least one polymerised resin; or at least one hydrogenated resin, at least one polyterpene resin, and at least one polymerised resin.

Natural resins such as hydrogenated resins or polymerised resins are well-known to the person skilled in the art, and may e.g. be based on abletic acid.

The encapsulation delivery systems and the confectionary composition of the invention offer the encapsulated high intensity sweetener a barrier having an improved hydrophobicity. The improved barrier efficiently protects the encapsulated high intensity sweetener against moisture and other components that may affect the stability of the high intensity sweetener and the resulting confectionary composition.

Another advantage of the encapsulation delivery systems of the invention is that natural resins are of similar chemical structure as some confectionary bases, such as gum bases, which make the encapsulation delivery systems easier to mix and easier to uniformly distribute in confectionary base. The similarity in chemical structure has the additional effect that the encapsulation delivery systems bind easily to the confectionary base, such as gum bases.

Both uniform distribution of the encapsulation delivery systems and efficient binding to the confectionary base are believed to contribute to an improved coherency and an improved mouth feel of the resulting confectionary composition.

Yet an advantage of the encapsulation delivery systems of the invention is their ability to efficiently delay the release of the high intensity sweetener from the confectionary composition.

In an embodiment of the invention, the one or more encapsulation delivery systems further comprise at least one texture modifying agent.

The one or more encapsulation delivery systems typically comprise the texture modifying agent in an amount in the range of 1-25% by weight, preferably in an amount in the range of 2-20% by weight, such as in an amount in the range of 5-15% by weight.

In an embodiment of the invention, the texture modifying agent comprises an elastomer. In another embodiment of the invention, the texture modifying agent comprises a softening system, and in yet another embodiment of the invention, the texture modifying agent comprises both an elastomer and a softening system.

Thus, in a preferred embodiment of the invention, the one or more encapsulation delivery systems further comprise at least one elastomer.

In another embodiment of the invention, the one or more encapsulation delivery systems furthermore comprise a softening system.

The softening system may e.g. be present in an amount of 3-10% by weight of the one or more encapsulation delivery systems.

The modified release of the confectionary composition relates to a modified release of high intensity sweetener when the confectionary composition is chewed. A unique advantage of the one or more encapsulation delivery systems comprising natural resin and high intensity sweetener is that they may release the high intensity sweetener very slowly.

The encapsulation delivery system of the present invention may comprise at least one high intensity sweetener encapsulated in an encapsulation matrix. In some embodiments, the encapsulation matrix may comprise some or all of the high intensity sweetener. The encapsulation matrix may comprise at least one natural resin. The encapsulation matrix may furthermore comprise components such as a softening system as described herein and/or an elastomer as described herein. In some embodiments, the encapsulation matrix may comprise further materials and ingredients. In particular the encapsulation matrix may comprise further resinous or elastomeric components. In addition, the encapsulation matrix may comprise non-high intensity sweetener ingredients, which will be known to the person skilled in the art such as for instance active ingredients.

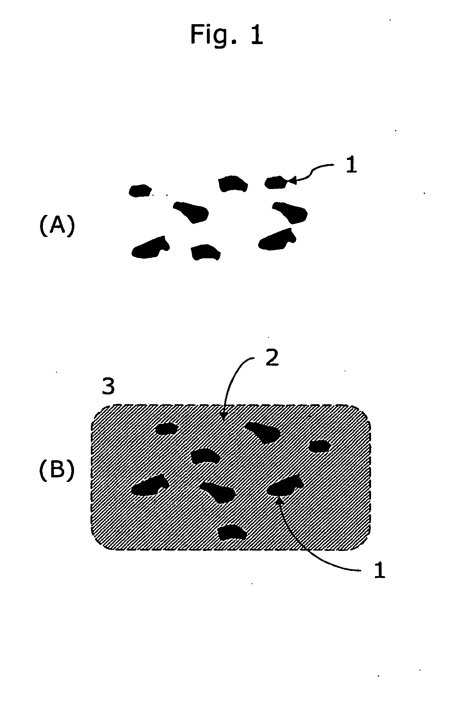

An encapsulation delivery system is typically a particulate system, i.e. containing one or more particles comprising the encapsulation matrix encapsulating the at least one high intensity sweetener. When present in the confectionary composition, the one or more encapsulation delivery systems may be dispersed as particles throughout the confectionary composition as illustrated in Figure 1.

The confectionary composition according to the present invention has shown to have an increased stability and thus a longer shelf life relative to prior art confectionary compositions. Without being bound by theory, it is believed that the increased stability is due to the presence of the natural resin, and in particular polyterpene resin, which has lower water permeability than prior art encapsulation materials.

In an embodiment of the invention, the at least one natural resin has a softening point (Sp.) of at most 200°C, preferably at most 130°, and even more preferably of at most 100°C.

In another embodiment of the invention, the at least one natural resin has a softening point of at least 70°C, such as at least 80°C, preferably of at least 100°C, and even more preferably of at least 110°C, such as at least 120°C.

For example, the at least one natural resin may have a softening point in the range of 70-200°C, preferably in the range of 70-130°C°, and even more preferably in the range of 75-95°C°.

In a preferred embodiment of the invention, the at least one polyterpene resin comprises polymerised monoterpenes. It is envisioned that the at least one polyterpene resin may consist essentially of polymerised monoterpenes.

In a further preferred embodiment of the invention, the at least one polyterpene resin comprises polymerised cyclic monoterpenes, and it envisioned that the at least one polyterpene resin may consist essentially of polymerised cyclic monoterpenes.

In a preferred embodiment of the invention, the at least one polyterpene resin comprises polymerised limonene. The at least one polyterpene resin may consist essentially of polymerised limonene.

In a preferred embodiment of the invention the at least one polyterpene resin comprises polymerised alpha-pinene. The at least one polyterpene resin consists essentially of polymerised alpha-pinerie.

In a preferred embodiment of the invention, the at least one polyterpene resin comprises polymerised beta-pinene. The at least one polyterpene resin may consist essentially of polymerised beta-pinene.

Also, the at least one polyterpene resin may comprise styrenated polyterpene resin.

The one or more encapsulation delivery systems may comprise a combination of two or more polyterpene resins. For example the encapsulation delivery system may comprise a combination of polymerised alpha-pinene and polymerised beta-pinene; a combination of polymerised alpha-pinene and polymerised limonene; a combination of polymerised alpha-pinene and styrenated polyterpene resin.

In an embodiment of the invention, the at least one polyterpene resin comprises at least 50% by weight polymerised monoterpenes, preferably at least 75% by weight polymerised monoterpenes, even more preferably at least 95% by weight polymerised monoterpenes.

In another embodiment of the invention, the at least one polyterpene resin comprises at least 50% by weight polymerised cyclic monoterpenes, preferably at least 75% by weight polymerised cyclic monoterpenes, even more preferably at least 95% by weight polymerised cyclic monoterpenes.

In some embodiments, the elastomer may be or include one or more of the following: butyl rubber, polyisobutylen, isobutylene-isoprene copolymer, styrene-butadiene copolymer, styrene-isoprene-styrene copolymer, polyisoprene, polyethylene, vinyl acetate-vinyl laurate copolymer, and combinations thereof.

Useful synthetic elastomers include, but are not limited to, synthetic elastomers listed in U.S. Food and Drug Administration, CFR, Title 21, Section 172,615, the Masticatory Substances, Synthetic, the contents of which are incorporated herein by reference for all purposes) such as polyisobutylene. e.g. having a gas pressure chromatography (GPC) average molecular weight in the range of about 10,000 to 1,000,000 including the range of 50,000 to 80,000, isobutylene-isoprene copolymer (butyl elastomer), styrene- butadiene copolymers e.g. having styrene-butadiene ratios of about 1:3 to 3: 1, polyisoprene, polyethylene, vinyl acetate-vinyl laurate copolymer e.g. having a vinyl laurate content of about 5 to 50% by weight such as 10 to 45% by weight of the copolymer, and combinations hereof.

It is possible to combine a synthetic elastomer having a high molecular weight and a synthetic elastomer having a low molecular weight elastomer. Presently preferred combinations of synthetic elastomers include, but are not limited to, polyisobutylene and styrene-butadiene, polyisobutylene and polyisoprene, polyisobutylene and isobutylene-isoprene copolymer (butyl rubber) and a combination of polyisobutylene, styrene-butadiene copolymer and isobutylene isoprene copolymer, and all of the above individual synthetic polymers in admixture with polyvinyl acetate, vinyl acetate-vinyl laurate copolymers, respectively and mixtures thereof.

The presently preferred elastomers are butyl rubber and polyisobutylen, which e.g. may be used separately or in combination in the one or more encapsulation delivery systems.

In accordance with the present invention the chewable confectionary composition comprises at least one confectionary ingredient.

In a useful embodiment, the at least one confectionary ingredient of the confectionary composition may comprise at least one high intensity sweetener.

In the context of the present invention, the term "high intensity sweetener" or "high potency sweetener" relates to sweeteners that have a more intense sweetness than sucrose.

Useful high intensity sweeteners may have a sweetness intensity which is at least 30 times higher than the sweetness intensity of sucrose, and preferably at least 50 times higher than the sweetness intensity of sucrose, such as at least 200 times higher than the sweetness intensity of sucrose, or at least 500 times higher than the sweetness intensity of sucrose.

In a preferred embodiment of the invention, the at least one high intensity sweetener is selected from the group consisting of sucralose, neotame, NEPH, aspartame, salts of acesulfame (such as acesulfame-K), alitame, saccharin and its salts, cyclamic acid and its salts, glycyrrhizin, dihydrochalcones, thaumatin, monellin, stevioside, and mixtures thereof.

The at least one further high intensity sweetener of the confectionary composition may be the same as the at least one high intensity sweetener of the at least one encapsulation delivery system. Alternatively, the at least one high intensity sweetener of the confectionary composition may be different from the at least one high intensity sweetener of the at least one encapsulation delivery system.

The at least one high intensity sweetener will typically be in a particulate form and may for example comprise a ground high intensity sweetener.

In a preferred embodiment of the invention, the average particle size of the at least one high intensity sweetener is in the range of 0.1-100 µm, preferably in the range of 1-50 µm.

The one or more encapsulation delivery systems may comprise an amount of polyterpene resin in the range of 5-100% by weight, preferably in the range of 20-80% by weight, and even more preferred in the range of 30-60% by weight.

The one or more encapsulation delivery systems may comprise an amount of the at least one polyterpene resin in the range of 5-100% by weight, preferably in the range of 20-80% by weight, and even more preferred in the range of 30-60% by weight.

The one or more encapsulation delivery systems may contain a high content of polyterpene resin, e.g. an amount of polyterpene resin in the range of 50-100% by weight of the encapsulation delivery system, e.g. in the range of 60-95% by weight, such as in the range of 65-80% by weight.

The one or more encapsulation delivery systems may also contain an amount of polyterpene resin in the range of 5-60% by weight of the encapsulation delivery system, e.g. in the range of 15-50% by weight, such as in the range of 25-40% by weight.

The one or more encapsulation delivery systems may e.g. comprise an amount of the at least one elastomer in the range of 0 -30% by weight, preferably in the range of 5-20% by weight, even more preferred in the range of 7-15% by weight or in the range of 5-10% by weight.

The one or more encapsulation delivery systems could for example comprise an amount of the at least one high intensity sweetener in the range of 0.1-50% by weight, preferably in the range of 10-45% by weight, even more preferred in the range of 20-40% by weight.

Normally, the confectionary composition comprises an amount of the at least one high intensity sweetener in the range of 0.1-10% by weight, preferably in the range of 0.2-5% by weight, even more preferred in the range of 0.3-3% by weight.

When the weight percentage of a component of the confectionary composition is described herein, the weight percentage is related to the uncoated confectionary composition unless stated otherwise.

In an embodiment of the invention, the confectionary composition comprises a total amount of high intensity sweetener in the range of 0.1-10% by weight, preferably in the range of 0.5-5% by weight, even more preferred in the range of 1-3% by weight.

In an embodiment of the invention, the one or more encapsulation delivery systems furthermore comprise at least one food acid.

In another embodiment of the invention, the at least one confectionary ingredient comprises at least one food acid.

In the context of the present invention, the term "food acid" pertains to acids that are safe to use in food products. The food acids are typically mono-, di-, or tri-carboxylic acids. The food acid, that is, the at least one food acid may e.g. be selected from the group consisting of citric acid, tartaric acid, malic acid, fumaric acid, succinic acid, ascorbic acid, adipic acid and lactic acid, and mixtures thereof. Phosphoric acid may also be a food acid according to the present invention.

The at least one food acid is typically selected from the group consisting of citric acid, tartaric acid, malic acid, fumaric acid, succinic acid, ascorbic acid, adipic acid and lactic acid, and mixtures thereof.

The one or more encapsulation delivery systems may comprise an amount of the at least one food acid in the range of 1-50% by weight, preferably in the range of 5-45% by weight, even more preferred in the range of 20-40% by weight.

It is envisioned that the confectionary composition may comprise an amount of the at least one food acid in the range of 0.1-10% by weight, preferably in the range of 0.5-5% by weight, even more preferred in the range of 1-3% by weight.

The at least one food acid may e.g. comprise a ground food acid.

The confectionary composition may comprise an amount of the one or more encapsulation delivery systems in the range of 0.5-20% by weight, preferably in the range of 1-10% by weight, even more preferred in the range of 1.5-6% by weight.

A range of different particle sizes of the one or more encapsulation delivery systems are envisioned. However, the average particle size of the one or more encapsulation delivery systems is normally in the range of 100-2000 µm, preferably in the range of 100-1000 µm, and even more preferred in the range of 100-800 µm. The size of a particle is measured as the length of the longest dimension of the particle.

In preferred embodiments of the invention, the one or more encapsulation delivery systems comprise polyvinyl acetate. In some embodiments, polyvinyl acetate may e.g. have a GPC average molecular weight in the range of 2,000 to 90,000 such as the range of 3,000 to 80,000 including the range of 30,000 to 50,000.

The one or more encapsulation delivery systems may e.g. comprise at least one polyterpene resin and at least one polyvinyl acetate.

In some embodiments of the invention, the at least one polyvinyl acetate has a molar weight in the range of 5,000-40,000 g/mol, preferably in the range of 7,500 - 20,000 g/mol, and even more preferably in the range of 10,000 - 15,000 g/mol.

The molar weights of polymers mentioned herein are weight average molar weights unless stated otherwise.

In other embodiments of the invention, the at least one polyvinyl acetate has a molar weight (M_{w}) in the range of 40,000-100,000 g/mol, preferably in the range of 45,000 - 85,000 g/mol, and even more preferably in the range of 50,000 - 70,000 g/mol.

In an embodiment of the invention, the at least one polyvinyl acetate comprises a first polyvinyl acetate having a molar weight (M_{w}) in the range of 5,000-40,000 g/mol and a second polyvinyl acetate having a molar weight (M_{w}) in the range of 40,000-100,000 g/mol.

In a preferred embodiment of the invention, the at least one polyvinyl acetate comprises a first polyvinyl acetate having a molar weight (M_{w}) in the range of 7,500-30,000 g/mol and a second polyvinyl acetate having a molar weight (M_{w}) in the range of 45,000-85,000 g/mol.

In an even more preferred embodiment of the invention, the at least one polyvinyl acetate comprises a first polyvinyl acetate having a molar weight (M_{w}) in the range of 10,000-15,000 g/mol and a second polyvinyl acetate having a molar weight (M_{w}) in the range of 50,000-70,000 g/mol.

In a preferred embodiment of the invention, the one or more encapsulation delivery systems comprise polyterpene resin in an amount in the range of 5-80% by weight and polyvinyl acetate in an amount in the range of 5-80% by weight.

In another preferred embodiment of the invention, the one or more encapsulation delivery systems comprise polyterpene resin in an amount in the range of 20-40% by weight and polyvinyl acetate in an amount in the range of 20-40% by weight.

In yet another preferred embodiment of the invention, the one or more encapsulation delivery systems comprise polyterpene resin in an amount in the range of 25-35% by weight and polyvinyl acetate in an amount in the range of 25-35% by weight.

In a preferred embodiment of the invention, the one or more encapsulation delivery systems comprise polyterpene resin in an amount in the range of 10-30% by weight, the first polyvinyl acetate in an amount in the range of 10-30% by weight, and the second polyvinyl acetate in an amount in the range of 10-30% by weight.

In another preferred embodiment of the invention, the one or more encapsulation delivery systems comprise polyterpene resin in an amount in the range of 15-25% by weight, the first polyvinyl acetate in an amount in the range of 15-25% by weight, and the second polyvinyl acetate in an amount in the range of 15-25% by weight.

For some of these embodiments it may be preferred that the polyterpene resin has a softening point in the range of 70-100 degrees C, preferably in the range of 75-95 degrees C, and even more preferably in the range 80-90 degrees C.

Generally it is envisioned that the one or more encapsulation delivery systems may comprise polyvinyl acetate in an amount in the range of 10-90% by weight of the one or more encapsulation delivery systems. For example, the one or more encapsulation delivery systems may comprise polyvinyl acetate in an amount in the range of 15-85% by weight of the one or more encapsulation delivery systems, in the range of 20-80% by weight, in the range of 25-75% by weight, in the range of 30-70% by weight, in the range of 35-65% by weight, or in the range of 40-60% by weight, such as in the range of 45-55% by weight.

In an embodiment of the invention, the one or more encapsulation delivery systems comprise polyvinyl acetate in an amount in the range of 10-90% by weight of the one or more encapsulation delivery systems and natural resin in an amount in the range of 10-90% by weight of the one or more encapsulation delivery systems. For example, the one or more encapsulation delivery systems may comprise polyvinyl acetate in an amount in the range of 15-60% by weight of the one or more encapsulation delivery systems and natural resin in an amount in the range of 15-50% by weight of the one or more encapsulation delivery systems.

In another embodiment of the invention, the one or more encapsulation delivery systems comprise polyvinyl acetate in an amount in the range of 10-90% by weight of the one or more encapsulation delivery systems and polyterpene resin in an amount in the range of 10-90% by weight of the one or more encapsulation delivery systems. The one or more encapsulation delivery systems may e.g. comprise polyvinyl acetate in an amount in the range of 15-60% by weight of the one or more encapsulation delivery systems and natural resin in an amount in the range of 15-50% by weight of the one or more encapsulation delivery systems.

In an embodiment of the invention, the one or more encapsulation delivery systems comprise
- at least one polyterpene resin having a softening point in the range of 75-95 degrees C in an amount in the range of 10-30% by weight,
- a first polyvinyl acetate having a molar weight (M_{w}) in the range of 7,500-30,000 g/mol in an amount in the range of 10-30% by weight, and
- a second polyvinyl acetate having a molar weight (M_{w}) in the range of 45,000-85,000 g/mol in an amount in the range of 10-30% by weight.

In another embodiment of the invention, the one or more encapsulation delivery systems comprise
- at least one polyterpene resin having a softening point in the range of 105-125 degrees C in an amount in the range of 10-30% by weight,
- a first polyvinyl acetate having a molar weight (M_{w}) in the range of 7,500-30,000 g/mol in an amount in the range of 10-30% by weight,
- a second polyvinyl acetate having a molar weight (M_{w}) in the range of 45,000-85,000 g/mol in an amount in the range of 10-30% by weight, and
- a texture modifying agent, preferably a wax, in an amount in the range of 1-15% by weight.

In yet another embodiment of the invention, the one or more encapsulation delivery systems comprise
- at least one polyterpene resin having a softening point in the range of 75-95 degrees C in an amount in the range of 20-40% by weight,
- a polyvinyl acetate having a molar weight (M_{w}) in the range of 45,000-85,000 g/mol in an amount in the range of 20-40% by weight,
- an elastomer in an amount in the range of 1-15% by weight, and
- a softening system in an amount in the range of 1-15% by weight.

In a further embodiment of the invention, the one or more encapsulation delivery systems comprise
- at least one polyterpene resin having a softening point in the range of 105-125 degrees C in an amount in the range of 20-40% by weight,
- a polyvinyl acetate having a molar weight (M_{w}) in the range of 45,000-85,000 g/mol in an amount in the range of 20-40% by weight, and
- an elastomer in an amount in the range of 1-15% by weight, and
- a softening system in an amount in the range of 1-15% by weight.

In an additional' embodiment of the invention, the one or more encapsulation delivery systems comprise
- at least one polyterpene resin having a softening point in the range of 105-125 degrees C in an amount in the range of 20-40% by weight,
- a polyvinyl acetate having a molar weight (M_{w}) in the range of 45,000-85,000 g/mol in an amount in the range of 20-40% by weight, and
- a modifying system in an amount in the range of 1-15% by weight.

In another embodiment of the invention, the one or more encapsulation delivery systems comprise
- at least one polyterpene resin having a softening point in the range of 105-125 degrees C in an amount in the range of 20-40% by weight,
- a polyvinyl acetate having a molar weight (M_{w}) in the range of 45,000-85,000 g/mol in an amount in the range of 20-40% by weight,
- an elastomer in an amount in the range of 1-15% by weight, and
- a softening system in an amount in the range of 1-15% by weight.

In still another embodiment of the invention, the one or more encapsulation delivery systems comprise
- at least one polyterpene resin having a softening point in the range of 105-125 degrees C in an amount in the range of 20-40% by weight,
- a polyvinyl acetate having a molar weight (M_{w}) in the range of 45,000-85,000 g/mol in an amount in the range of 20-40% by weight, and
- an elastomer in an amount in the range of 1-15% by weight, and
- a wax in an amount in the range of 1-15% by weight.

Natural resins comprised in the encapsulation delivery system may include, but are not limited to, natural rosin esters, often referred to as ester gums including as examples glycerol esters of partially hydrogenated rosins, glycerol esters of polymerised rosins, glycerol esters of partially dimerised rosins, glycerol esters of tally oil rosins, pentaerythritol esters of partially hydrogenated rosins, methyl esters of rosins, partially hydrogenated methyl esters of rosins and pentaerythritol esters of rosins.

In a preferred embodiment of the invention, the confectionary composition comprises two or more encapsulation delivery systems, such as three or more encapsulation delivery systems. The different encapsulation delivery systems preferably have different release characteristics.

In one embodiment, the encapsulation delivery systems according to the invention further comprise at least one encapsulation delivery system comprising at least one high intensity sweetener and at least one polyvinyl acetate.

For example, the encapsulation delivery systems may comprise at least a first encapsulation delivery system comprising the at least one polyterpene resin and at least a second encapsulation delivery system comprising the at least one polyvinyl acetate.

Also, the encapsulation delivery systems may comprise at least a first encapsulation delivery system comprising the at least one hydrogenated resin and at least a second encapsulation delivery system comprising the at least one polyvinyl acetate.

Alternatively, the encapsulation delivery systems may comprise at least a first encapsulation delivery system comprising the at least one polymerised resin and at least a second encapsulation delivery system comprising the at least one polyvinyl acetate.

Useful encapsulation delivery systems comprising polyvinyl acetate are disclosed in the U.S. patent application with the publication No. 2005/0 260 266, the contents of which are incorporated herein by reference for all purposes.

It is preferred that said encapsulation delivery systems, if more than one, provide different release properties.

In a preferred embodiment of the invention, the one or more encapsulation delivery systems comprise at least one delayed release encapsulation delivery system releasing at least 25% of its high intensity sweetener during the period from 6 minutes to 15 minutes of chewing the confectionary composition.

In another preferred embodiment of the invention, the one or more encapsulation delivery systems comprise at least one delayed release encapsulation delivery system releasing at least 30% of its high intensity sweetener, preferably at least 30%, such as at least 35% or at least 40%, and even more preferred at least 50% such as at least 60%, during the period from 6 minutes to 15 minutes of chewing the confectionary composition.

The release is preferably measured according to the method described in Example 3.1.

The softening system comprised in the one or more encapsulation delivery systems may comprise an emulsifier.

A number of different emulsifiers may be used in the encapsulation delivery systems. For example, anionic, cationic, amphoteric or non-ionic emulsifiers can be used. Suitable emulsifiers include lecithins, polyoxyethylene stearate, polyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters of inter-esterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

The presently preferred emulsifiers comprised in the encapsulation delivery systems are selected from the group consisting of mono-diglyderide, lecithin, and triacetin.

The softening system comprised in the one or more encapsulation delivery systems may comprise a wax.

The wax may be selected from the group consisting paraffin wax, beeswax, vegetable wax, candelilla wax, canauba wax, petroleum waxes, and the like, and mixtures thereof.

In a preferred embodiment of the invention, the wax has a high melting point e.g. a melting point in the range 70-100°C. Preferably, the wax is a microcrystalline wax.

The softening system comprised in the one or more encapsulation delivery systems may comprise a fat.

The fat is preferably a high melting fat, e.g. having a melting point in the range 30-100°C.

The fat may e.g. include partially or fully hydrogenated vegetable or animal fats, such as partially or fully hydrogenated coconut oil, partially or fully hydrogenated palm oil, partially or fully hydrogenated palm kernel oil, partially or fully hydrogenated rapeseed oil, partially or fully hydrogenated castor oil, partially or fully hydrogenated maize oil, partially or fully hydrogenated cottonseed oil, partially or fully hydrogenated olive oil, partially or fully hydrogenated sunflower oil, partially or fully hydrogenated safflower oil, partially or fully hydrogenated sesame oil, partially or fully hydrogenated soybean oil, beef tallow, partially or fully hydrogenated beef tallow, lard, and partially or fully hydrogenated lard, and any mixture thereof and any derivative thereof.

The one or more encapsulation delivery systems may furthermore comprise a detackifier, for example if elastomer is present.

The detackifier may e.g. be selected from the group consisting of talc powder, calcium carbonate, starches, such as corn starch; and mineral fillers, such as titanium dioxide.

In an embodiment of the invention, the one or more encapsulation delivery systems comprise:
- a first encapsulation delivery system comprising a first high intensity sweetener, and
- a second encapsulation delivery system comprising a second high intensity sweetener, which second high intensity sweetener is different from the first high intensity sweetener.

In another embodiment of the invention, the one or more encapsulation delivery systems comprise an encapsulation delivery system comprising a first high intensity sweetener and a second high intensity sweetener, which second high intensity sweetener is different from the first high intensity sweetener.

In yet an embodiment of the invention, the first high intensity sweetener is aspartame and the second high intensity sweetener is a salt of acesulfame, such as acesulfame-K.

The confectionary composition may be a chewing gum, a toffee, a caramel, a gummy candy, or a jelly candy, and combinations thereof. In the present context, the confectionary compositions are not limited to these specific compositions.

In a preferred embodiment of the invention, the confectionary composition is a chewing gum.

Chewy candies include caramel, taffies and toffee type candies. These are dairy based products and frequently contain fresh cream, but also may be made from skim or fresh whole milk, unsweetened evaporated milk, sweetened condensed milk or reconstituted milk solids. Toffees are basically high-cooked caramels.

Gummy and jelly candies typically are prepared from a boiled mixture of mixed sugars which is then blended with a gelling agent and processed into any of a wide range of shapes by depositing into starch moulds. A number of gelling agents may be utilized among which are starch, gelatin, pectin, gum arabic and agar. The foregoing is known as a Mogul process. The candies can also be extruded or simply cast onto a slab or cast into rubber moulds. The pieces are then held to set and dry. For a general description of this type of process, see Lees and Jackson; Sugar Confectionary and Chocolate Manufacture; 1973 (ISBN 0249 44120 9); pages 226-268, which is incorporated by reference herein for all uses.

Lozenges comprise a sugar dough which as been flavoured, cut to shape and subsequently dried to remove added water. The dough normally contains a mucilage, or binder, usually a solution of gum and gelatines, which is added to assist in retention of shape.

These candies are typically prepared employing a simple process which involves mixing the gum and gelatine mucilage with powdered sugar and flavouring agent, followed by air drying.

Liquorice is a confection manufactured from a paste, which usually includes treacle, wheat flour, liquorice extract and caramel, along with many other optional ingredients. Treacle is a dark, viscous liquid with a distinctive bitter back-taste. It comprises cane molasses to which sugar syrups have been added. The wheat flour acts as a bulking and gelling agent. Licorice is typically prepared by pre-mixing the ingredients and then cooking at 120° C.-145° C in a cooker such as a scrape surface heat exchanger. The cooked liquorice may then be extruded as ropes and cut into cylinders.

Panned candies are typically cold-processed in unheated or moderately heated revolving pans. Included in this category are jelly eggs, jelly beans, marshmallows and coated chewing gums.

The confectionary composition may furthermore comprise a coating, e.g. a hard coating, a soft coating, or a film coating.

Typically the confectionary composition comprises the coating in an amount in the range of 1-80% by weight, such as in an amount in the range of 10-50%, or 15-45% by weight of the coated confectionary composition. Preferably, the confectionary composition comprises the coating in an amount in the range of 20-40% by weight of the coated confectionary composition.

The coating may be a hard coating, which term is used in the conventional meaning of that term including sugar coatings and sugar-free (or sugarless) coatings and combinations thereof. The objects of hard coating are to obtain a sweet, crunchy layer, which is appreciated by the consumer, and to protect the mixture for various reasons. In a typical process of providing the mixture with a protective sugar coating the confectionary centers are successively treated in suitable coating equipment with aqueous solutions of crystallizable sugar such as sucrose or dextrose, which, depending on the stage of coating reached, may contain other functional ingredients, e.g. fillers, colours, etc. In the present context, the sugar coating may contain further functional or active compounds including flavouring agents, pharmaceutically active compounds and/or polymer degrading substances.

In the production of confectionary compositions it may, however, be preferred to replace the cariogenic sugar compounds in the coating by other, preferably crystallizable, sweetening compounds that do not have a cariogenic effect. In the art such coating is generally referred to as sugarless or sugar-free coatings. Presently preferred non- cariogenic hard coating substances include polyols, e.g. sorbitol, maltitol, mannitol, xylitol, erythritol, lactitol, isomalt and tagatose which are obtained by industrial methods by hydrogenation of D-glucose, maltose, fructose or levulose, xylose, erythrose, lactose, isomaltulose and D-galactose, respectively.

In a typical hard coating process, a syrup containing crystallizable sugar and/or polyol is applied onto the confectionary compositions and the water it contains is evaporated off by blowing with warm, dry air. This cycle may be repeated several times, typically 10 to 80 times, in order to reach the swelling required. The term "swelling" refers to the increase in weight of the products, as considered at the end of the coating operation by comparison with the beginning, and in relation to the final weight of the coated confectionary composition.

Coated confectionaries include jelly eggs, jelly beans, marshmallows, and coated chewing gums.

Alternatively, the coating may be a soft coating. Such a soft coating is applied using conventional methods and may advantageously consist of a mixture of a sugar or any of the above non-cariogenic, sugar-less sweetening compounds and a starch hydrolysate.

The coating may be a film coating. The film coating may be obtained by subjecting the mixture to a film coating process and which therefore comprises one or more film-forming polymeric agents and optionally one or more auxiliary compounds, e.g. plasticizers, pigments and opacifiers. A film coating is a thin polymer-based coating applied to a confectionary composition of any of the above forms. The thickness of such a film coating is usually between 20 and 100 µm. Generally, the film coating is obtained by passing the confectionary composition through a spray zone with atomized droplets of the coating materials in a suitable aqueous or organic solvent vehicle, after which the material adhering to the confectionary composition is dried before the next portion of coating is received. This cycle is repeated until the coating is complete..

In the present context, suitable film-coating polymers include edible cellulose derivatives such as cellulose ethers including methylcellulose (MC), hydroxyethyl cellulose (HEC), hydroxypropyl cellulose (HPC) and hydroxypropyl methylcellulose (HPMC). Other useful film-coating agents are acrylic polymers and copolymers, e.g. methylacrylate aminoester copolymer or mixtures of cellulose derivatives and acrylic polymers. A particular group of film-coating polymers also referred to, as functional polymers are polymers that, in addition to its film-forming characteristics, confer a modified release performance with respect to active components of the chewing gum formulation. Such release modifying polymers include methylacrylate ester copolymers, ethylcellulose (EC) and enteric polymers designed to resist the acidic stomach environment, yet dissolve readily in the duodenum. The latter group of polymers includes: cellulose acetate phtalate (CAP), polyvinyl acetate phtalate (PVAP), shellac, metacrylic acid copolymers, cellulose acetate trimellitate (CAT) and HPMC. It will be appreciated that the outer film coating according to the present invention may comprise any combination of the above film-coating polymers.

In other embodiments of the invention, the film-coating layer of the confectionary composition comprise a plasticizing agent having the capacity to alter the physical properties of a polymer to render it more useful in performing its function as a film forming material. In general, the effect of plasticizers will be to make the polymer softer and more pliable as the plasticizer molecules interpose themselves between the individual polymer strands thus breaking down polymer-polymer interactions. Most plasticizers used in film coating are either amorphous or have very little crystallinity.

In the present context, suitable plasticizers include polyols such as glycerol, propylene glycol, polyethylene glycol, e.g. the 200-6000 grades hereof, organic esters such as phtalate esters, dibutyl sebacate, citrate esters and thiacetin, oils/glycerides including castor oil, acetylated monoglycerides and fractionated coconut oil.

The choice of film-forming polymer(s) and plasticizing agent(s) for the film coating of the mixture is made with due consideration for achieving the best possible barrier properties of the coating in respect of dissolution and diffusion across the film of moisture and gasses.

The film coating of the mixture may also contain one or more colourants or opacifiers. In addition to providing a desired colour hue, such agents may contribute to protecting the confectionary composition against pre-chewing reactions, in particular by forming a barrier against moisture and gasses. Suitable colourants/opacifiers include organic dyes and their lakes, inorganic colouring agents, e.g. titanium oxide and natural colours such as e.g. beta-carotene.

Additionally, film coatings may contain one or several auxiliary substances such as flavouring agents and waxes or saccharide compounds such as polydextrose, dextrins including maltodextrin, lactose, modified starch, a protein such as gelatine or zein, a vegetable gum and any combination thereof.

The coating, in general, typically comprises one or more layers. For example the number of layers of the coating may be in the range of 1-100 layers, such as 3-75 layers, 10-60 layers, and 20-40 layers.

The coating may comprise a wax layer. In an embodiment of the invention, the outermost layer of the coating is a wax layer.

In one embodiment, the chewing gum does not comprise a coating.

In a preferred embodiment of the invention, the confectionary composition is a chewing gum. A chewing gum may comprise a gum base.

The gum base typically comprises an elastomer. Also, the gum base typically comprises a resin.

The gum base of the mixture normally comprises an elastomer. Useful synthetic elastomers include, but are not limited to, synthetic elastomers listed in U.S. Food and Drug Administration, CFR, Title 21, Section 172,615, the Masticatory Substances, Synthetic, the contents of which are incorporated herein by reference for all purposes) such as polyisobutylene. e.g. having a gas pressure chromatography (GPC) average molecular weight in the range of about 10,000 to 1,000,000 including the range of 50,000 to 80,000, isobutylene-isoprene copolymer (butyl elastomer), styrene- butadiene copolymers e.g. having styrene-butadiene ratios of about 1:3 to 3:1, polyisoprene, polyethylene, vinyl acetate-vinyl laurate copolymer e.g. having a vinyl laurate content of about 5 to 50% by weight such as 10 to 45% by weight of the copolymer, and combinations hereof.

It is possible to combine a synthetic elastomer having a high molecular weight and a synthetic elastomer having a low molecular weight elastomer in a gum base. Presently preferred combinations of synthetic elastomers include, but are not limited to, polyisobutylene and styrene-butadiene, polyisobutylene and polyisoprene, polyisobutylene and isobutylene-isoprene copolymer (butyl rubber) and a combination of polyisobutylene, styrene-butadiene copolymer and isobutylene isoprene copolymer, and all of the above individual synthetic polymers in admixture with polyvinyl acetate, vinyl acetate-vinyl laurate copolymers, respectively and mixtures thereof.

Typically, the gum base comprises at least one elastomer in an amount in the range of 3-80% by weight of the gum base, preferably in an amount in the range of 4-60% by weight of the gum base, and even more preferred in the range of 5-40% by weight of the gum base, such as in the range of 8-20% by weight of the gum base.

The gum base may comprise one or more resins contributing to obtain the desired masticatory properties and acting as plasticizers for the elastomers of the gum base. In the present context, useful resins include, but are not limited to, natural rosin esters, often referred to as ester gums including as examples glycerol esters of partially hydrogenated rosins, glycerol esters of polymerised rosins, glycerol esters of partially dimerised rosins, glycerol esters of tally oil rosins, pentaerythritol esters of partially hydrogenated rosins, methyl esters of rosins, partially hydrogenated methyl esters of rosins and pentaerythritol esters of rosins, polyvinyl acetate, e.g. having a GPC average molecular weight in the range of 2,000 to 90,000 such as the range of 3,000 to 80,000 including the range of 30,000 to 50,000, where the higher molecular weight polyvinyl acetates are typically used in bubble gum base. Other useful resinous compounds include synthetic resins such as terpene resins derived from alpha-pinene, beta-pinene, and/or d-limonene, natural terpene resins; and any suitable combinations of the foregoing. The choice of resins will vary depending on the specific application, and on the type of elastomer(s) being used.

Usually, the gum base comprises at least one resin in an amount in the range of 10-90% by weight of the gum base, preferably in the range of 20-80% by weight, even more preferred in the range of 30-70% by weight of the gum base, such as in the range of 40-60% by weight of the gum base.

The gum base may furthermore comprise a wax. When a wax is present in the gum base, it softens the polymeric elastomer mixture and improves the elasticity of the gum base. The waxes employed will have a melting point below about 60°C, and preferably between about 45°C and about 55°C. The low melting wax may be a paraffin wax. The wax may be present in the gum base in an amount from about 6% to about 10%, and preferably from about 7% to about 9.5%, by weight of the gum base.

In addition to the low melting point waxes, waxes having a higher melting point may be used in the gum base in amounts up to about 5%, by weight of the gum base. Such high melting waxes include beeswax, vegetable wax, candelilla wax, canauba wax, most petroleum waxes, and the like, and mixtures thereof.

In addition to the components set out above, the gum base may include a variety of other components, such as components selected from elastomer solvents, emulsifiers, plasticizers, fillers, and mixtures thereof.

The gum base may also include emulsifiers, which aid in dispersing any immiscible components into a single stable system. The emulsifiers useful in this invention include glyceryl monostearate, lecithin, fatty acid monoglycerides, diglycerides, propylene glycol monostearate, and the like, and mixtures thereof. The emulsifier may be employed in amounts from about 2% to about 15%, and more specifically, from about 7% to about 1%, by weight of the gum base.

The gum base may also include plasticizers or softeners to provide a variety of desirable textures and consistency properties. Because of the low molecular weight of these components, the plasticizers and softeners are able to penetrate the fundamental structure of the gum base making it plastic and less viscous. Useful plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like, may also be incorporated into the gum base. The plasticizers and softeners are generally employed in the gum base in amounts up to about 20% by weight of the gum base, and more specifically in amounts from about 9% to about 17%, by weight of the gum base.

Plasticizers also include hydrogenated vegetable oils and include soybean oil and cottonseed oil which may be employed alone or in combination. These plasticizers provide the gum base with good texture and soft chew characteristics. These plasticizers and softeners are generally employed in amounts from about 5% to about 14%, and more specifically in amounts from about 5% to about 13.5%, by weight of the gum base.

Anhydrous glycerin may also be employed as a softening agent, such as the commercially available United States Pharmacopeia (USP) grade. Glycerin is a syrupy liquid with a sweet warm taste and has a sweetness of about 60% of that of cane sugar. Because glycerin is hygroscopic, the anhydrous glycerin may be maintained under anhydrous conditions throughout the preparation of the chewing gum composition.

Although softeners may be present to modify the texture of the gum composition, they may be present in reduced amounts as compared to typical gum compositions. For example, they may be present from about 0.5 to about 10% by weight based on the total weight of the composition, or they may not be present in the composition, since a surfactant active can act as a softener.

The gum base of this invention may also include effective amounts of bulking agents such as mineral adjuvants, which may serve as fillers and textural agents. Useful mineral adjuvants include calcium carbonate, magnesium carbonate, alumina, aluminum hydroxide, aluminum silicate, talc, tricalcium phosphate, dicalcium phosphate, calcium sulfate and the like, and mixtures thereof. These fillers or adjuvants may be used in the gum base compositions in various amounts. Preferably the amount of filler, when used, will be present in an amount from about 15% to about 40%, and desirably from about 20% to about 30%, by weight of the gum base.

In an embodiment of the invention, the composition comprises an amount of gum base in the range of 10-90% by weight, preferably in the range of 20-70% by weight, even more preferred in the range of 40-60 by weight.

The at least one confectionary ingredient of the confectionary composition is selected from the group consisting of a bulk sweetener, a high intensity sweetener, a flavouring agent, a cooling agent, a warming agent, a softener, an emulsifier, a colouring agent, a binding agent, an acidulant, a filler, an antioxidant.

The flavouring agents are important for the organoleptic properties of the confectionary composition. Acids may prolong the perceived flavour of flavouring agents and in particular of fruit flavouring agents. The slow release of high intensity sweetener, which may be obtained when using the one or more encapsulation delivery systems of the present invention in a confectionary composition, appears to be particularly useful for prolonging the flavour sensation of flavouring agents, such as fruit flavouring agents.

Thus, in a preferred embodiment of the invention, the confectionary composition comprises a flavouring agent, e.g. a fruit flavouring agent.

The flavouring agents which may be used include those flavouring agents known to the skilled artisan, such as natural and artificial flavouring agents. These flavouring agents may be chosen from synthetic flavour oils and flavouring aromatics and/or oils, oleoresins and extracts derived from plants, leaves, flowers, fruits, and so forth, and combinations thereof.

Nonlimiting representative flavour oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavouring agents are artificial, natural and synthetic fruit flavours such as vanilla, and citrus oils including lemon, orange, lime, grapefruit, and fruit essences including apple, pear, peach, grape, strawberry, raspberry, cherry, plum, pineapple, apricot and so forth. These flavouring agents may be used in liquid or solid form and may be used individually or in admixture. Commonly used flavouring agents include mints such as peppermint, menthol, spearmint, artificial vanilla, cinnamon derivatives, and various fruit flavouring agents, whether employed individually or in admixture.

Other useful flavouring agents include aldehydes and esters such as cinnamyl acetate, cinnamaldehyde, citral diethylacetal, dihydrocarvyl acetate, eugenyl formate, p-methylamisol, and so forth may be used. Generally any flavouring agent or food additive such as those described in Chemicals Used in Food Processing, publication 1274, pages 63-258, by the National Academy of Sciences, may be used. This publication is incorporated herein by reference.

Further examples of aldehyde flavouring agents include but are not limited to acetaldehyde (apple), benzaldehyde (cherry, almond), , citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavours), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, strawberry shortcake, and mixtures thereof.

In some embodiments, the flavouring agent may be employed in either liquid form and/or dried form. When employed in the latter form, suitable drying means such as spray drying the oil may be used. Alternatively, the flavouring agent may be absorbed onto water soluble materials, such as cellulose, starch, sugar, maltodextrin, gum arabic and so forth or may be encapsulated. The actual techniques for preparing such dried forms are well-known.

In some embodiments, the flavouring agents may be used in many distinct physical forms well-known in the art to provide an initial burst of flavour and/or a prolonged sensation of flavour. Without being limited thereto, such physical forms include free forms, such as spray dried, powdered, beaded forms, encapsulated forms, and mixtures thereof.

The amount of flavouring agent employed herein may be a matter of preference subject to such factors as the type of final chewing gum composition, the individual flavour, the gum base employed, and the strength of flavour desired. Thus, the amount of flavouring may be varied in order to obtain the result desired in the final product and such variations are within the capabilities of those skilled in the art without the need for undue experimentation. In chewing gum compositions, the flavouring agent is generally present in amounts from about 0.02% to about 5%, and more specifically from about 0.1% to about 2%, and even more specifically, from about 0.8% to about 1.8%, by weight of the chewing gum composition.

Colouring agents may be used in amounts effective to produce the desired colour. The colouring agents may include pigments, which may be incorporated in amounts up to about 6%, by weight of the gum composition. For example, titanium dioxide may be incorporated in amounts up to about 2%, and preferably less than about 1%, by weight of the gum composition. The colourants may also include natural food colours and dyes suitable for food, drug and cosmetic applications. These colourants are known as F.D.& C. dyes and lakes. The materials acceptable for the foregoing uses are preferably water-soluble. Illustrative nonlimiting examples include the indigoid dye known as F.D.& C. Blue No. 2, which is the disodium salt of 5,5-indigotindisulfonic acid. Similarly, the dye known as F.D.& C. Green No. 1 comprises a triphenylmethane dye and is the monosodium salt of 4-[4-(N-ethyl-p-sulfoniumbenzylamino) diphenylmethylene]-[1-(N-ethyl-N-p-- sulfoniumbenzyl)-delta-2,5-cyclohexadieneimine]. A full recitation of all F.D.& C. colourants and their corresponding chemical structures may be found in the Kirk-Othmer Encyclopedia of Chemical Technology, 3rd Edition, in volume 5 at pages 857-884, which text is incorporated herein by reference.

The at least one confectionary ingredient may comprise a bulk sweetener.

The bulk sweetener may be selected from the group consisting of monosaccharides, disaccharides, polysaccharides, sugar alcohols, and mixtures thereof; randomly bonded glucose polymers such as those polymers distributed under the tradename POLYDEXTROSE by Pfizer, Inc., Groton, Conn.; isomalt, such as isomalt ST or isomalt GS, maltodextrins; hydrogenated starch hydrolysates; hydrogenated hexoses; and hydrogenated disaccharides.

For example the bulk sweetener may be selected from the group consisting of dextrose, sucrose, lactose, hydrogenated starch hydrolysates, xylitol, mannitol, sorbitol, maltitol, isomalt, erythritol, lactitol, and maltodextrin.

The confectionary composition normally comprises the bulk sweetener in an amount in the range of 5-95% by weight, such as in an amount in the range of 10-80% by weight.

The confectionary composition may comprise the bulk sweetener in an amount in the range of 30-70% by weight, such as in the range of 40-55% by weight, or in the range of 30-50% by weight.

The high intensity sweetener comprised by said at least one confectionary ingredient may be selected from the group consisting of sucralose, neotame, NEPH, aspartame, salts of acesulfame, alitame, saccharin and its salts, cyclamic acid and its salts, glycyrrhizin, dihydrochalcones, thaumatin, monellin, stevioside, and combinations thereof.

With respect to cooling agents, a variety of well known cooling agents may be employed. For example, among the useful cooling agents are included menthol, xylitol, menthane, menthone, menthyl acetate, menthyl salicylate, N,2,3-trimethyl-2-isopropyl butanamide (WS-23), N-ethyl-p-menthane-3-carboxamide (WS-3), menthyl succinate, 3,1-menthoxypropane 1,2-diol, among others. These and other suitable cooling agents are further described in the following U.S. patents, all of which are incorporated in their entirety by reference hereto: U.S. Pat. Nos. 4,230,688 and 4,032,661 to Rowsell et al.; 4,459,425 to Amano et al.; 4,136,163 to Watson et al.; and 5,266,592 to Grub et al. The cooling agents are typically present in amounts of about 0.001 to about 10% by weight of the total confectionary composition.

Warming components may be selected from a wide variety of compounds known to provide the sensory signal of warming to the user. These compounds offer the perceived sensation of warmth, particularly in the oral cavity, and often enhance the perception of flavours, sweeteners and other organoleptic components. Among the useful warming compounds included are vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamyleather, vanillyl alcohol n-hexyleather, vanillyl alcohol methylether, vanillyl alcohol ethyleather, gingerol, shogaol, paradol, zingerone, capsaicin, dihydrocapsaicin, nordihydrocapsaicin, homocapsaicin, homodihydrocapsaicin, ethanol, isopropol alcohol, iso-amylalcohol, benzyl alcohol, glycerine, and combinations thereof.

In an embodiment of the invention, the confectionary composition comprises a center filling.

The confectionary composition may be processed into in a number of different shapes such as a stick, a core, a tablet, a slab, a bead, a pellet, a tape, or a ball.

A confectionary composition according to the present invention, has typically a weight in the range of 0.1-100 g, such as in the range of 0.5-5 g or in the range of 0.75-2.5 g, preferably in the range of 0.8-2 g, and even more preferred in the range of 1-1.5 g. Center filled confectionary composition normally have weights in the range of 0.5-5 g, preferably in the range of 1-4 g, and even more preferred in the range of 2-3 g. Typical weights for bead shaped confectionary composition are in the range of 0.1-0.6 g, preferably in the range of 0.2-0.5 g, and even more preferred in the range of 0.3-0.4 g.

It should be understood that any embodiments and/or feature discussed above in connection with the chewable confectionary composition according to the invention apply by analogy to the below aspects of the present invention.

Another aspect of the present invention relates to a confectionary encapsulation delivery system essentially consisting of the encapsulation delivery system as described herein.

A further aspect of the invention relates to method of preparing a confectionary composition, the method comprising the step of mixing one or more encapsulation delivery systems with a confectionary base. Such confectionary compositions may be a chewing gum, a toffee, a caramel, a gummy candy, or a jelly candy.

Yet a further aspect of the invention relates to a method of preparing a particulate encapsulation delivery system comprising at least one high intensity sweetener and at least one natural resin. The encapsulation delivery system may be prepared by first melting the natural resin of the encapsulation delivery system, e.g. in a high shear mixer. A softening system may then be added to the molten polymer. The high intensity sweetener may then be added to the resulting mixture and mixed, e.g. under high shear.

The resulting filled polymer melt is then cooled and formed to a suitable size, e.g. by means such as chopping, pulverizing, milling or grinding. The encapsulation delivery system may be stored in an air tight container with low humidity until it is to be employed in a confectionary composition.

In other words, the method comprising the step of:
a) mixing the at least one high intensity sweetener with at least one natural resin,
b) converting the mixture of step a) to particles, thus obtaining the encapsulation delivery system.

Step a) may also involve mixing components such as a softening system and/or at least one elastomer with the at least one high intensity sweetener and the at least one natural resin.

The mixing of step a) is preferably performed at or above the softening point of the at least one natural resin, e.g. 0-10°C above the softening point of the at least one natural resin.

Step b) typically comprises a step of cooling the mixture of step a) prior to the converting the mixture into particles. The cooling may e.g. be performed by means of air, gas or liquid.

The method of preparing a particulate encapsulation delivery system may furthermore comprise an extrusion process and/or a cutting process as described in U.S. patent No. 5,789,002, the contents of which are incorporated herein by reference for all purposes.

Other methods of preparing an encapsulation delivery system may be found in the U.S. patent application with the publication No. 2005/0 260 266, the contents of which are incorporated herein by reference for all purposes.

It should be noted that, according to the present invention, embodiments and features described in the context of one of the aspects of the present invention also apply to the other aspects of the invention unless stated otherwise.

The following examples are included to demonstrate particular embodiments of the invention. However, those of skill in the art should, in view of the present disclosure, appreciate that many changes can be made in the specific embodiments which are disclosed and still obtain a like or similar result without departing from the spirit and scope of the invention. The following examples are offered by way of illustration and are not intended to limit the invention in any way. The invention will now be described in further details in the following non-limiting examples.

### EXAMPLES

The object of the studies described in the following examples was to test different encapsulation delivery systems comprising combinations of high intensity sweeteners, encapsulation materials, softening systems, elastomers and other ingredients.

Furthermore, it was an object of these studies to test a simple chewing gum composition comprising different encapsulation delivery systems and different particle sizes of the encapsulation delivery systems.

### Example 1: Preparation of encapsulation delivery systems

For the preparation of the different encapsulation delivery systems, the following materials were used:

**Table 1.0: Softening systems**

| **Raw material name** | **Melting point** |
|---|---|
| Lecithin Solid | - |
| Sunflower Lecithin | Liquid |
| Mono-diglyceride | 60 - 65°C |
| Glyceryl triacetat | Liquid |
| Microcrystalline wax A | 72 - 84°C |
| Microcrystalline wax B | 88 - 102°C |
| Hydrogenated Vegetable oils | 69 - 73°C |
| Partially Hydrogenated vegetable oils | 42 - 50°C |
| Hydrogenated rapeseed oil | 62 - 65°C |
| Acetylated mono-diglyceride | 38 - 41°C |

Encapsulation materials:
o PVAc with a low Mw, 10,000 - 15,000
o PVAc with a high Mw, 50,000 - 70,000
o Piccolyte® C 85, a polyterpene resin of delta - Limonene (Sp. 82 - 88°C)
o Piccolyte® C115, a polyterpene resin of delta - Limonene (Sp. 112 - 118°C)
o Piccolyte® C135, a polyterpene resin of delta - Limonene (Sp. 133 - 138°C)
o Piccolyte® A115, a polyterpene resin of alpha-pinene (Sp. 112 - 118°C)
o Piccolyte® HM115, styrenated polyterpene resin (Sp. 112 - 118°C)
o Piccolyte® S125, a polyterpene resin of beta - pinene (Sp. 122 - 128°C)
o Polymerized resin, Glycerol ester of polymerized gum rosin (Sp. 95 - 105°C)
o Hydrogenerized resin, Glycerol ester of partially hydrogenated gum rosin (Sp. 77 - 81°C)

Furthermore, in some encapsulation delivery systems, butyl rubber was used as the elastomer and talc powder was used as anti-caking agent.

The following three High intensity sweeteners were used in the encapsulation delivery system: Acesulfame - K, Aspartame and Sucralose.

The encapsulation delivery systems were prepared by first adding elastomer and talc powder to a Z-blade mixer at 90 -120°C. Subsequently, polyterpene resin (Piccolyte®) was added slowly, to ensure that the elastomer was mixed thoroughly. Following this, the softening system was added to the mixer, and finally high intensity sweetener was added. The admixture was taken out of the kneading kettle and by rolling and scoring divided until small pieces. The admixture was stored at room temperature until grinding.

Before grinding, the small pieces were cooled down with carbon dioxide for at least 2 hours.

The small pieces were grinded through a 3 mm sieve in the granulator. During the grinding process, a little dry ice was added. The carbon dioxide was added to avoid that the pieces became hot and sticky during the grinding process.

Tables 1.1 - 1.5 below show the combinations high intensity sweeteners, encapsulation materials, softening systems, elastomers and other ingredients in different encapsulation delivery systems.

**Table 1.1: Encapsulated delivery system**

| **Batch no.** | **234** | **235** | **236** | **237** | **238** | **239** | **240** | **241** | **242** |
|---|---|---|---|---|---|---|---|---|---|
| **High intensity** | | | | | | | | | |
| **sweetner** | | | | | | | | | |
| Acesulfame -K | 30 | 30 | 30 | 30 | 30 | 30 | 30 | 30 | 30 |
| **Encaps. Material** | | | | | | | | | |
| **Resin** | | | | | | | | | |
| PVAc ( low Mw) | - | - | - | - | - | - | - | - | - |
| PVAc (high Mw) | - | - | - | - | - | 48 | - | - | |
| Piccolyte C85 | - | - | - | - | - | - | | | |
| Piccolyte C115 | 45 | 50 | 48 | 43 | 43 | - | 39 | 40 | 40 |
| **Softening system** | | | | | | | | | |
| Lecithin (Sunflower) | - | - | - | - | - | - | 3 | - | |
| Microcystalline Wax B | - | - | 7 | - | - | 7 | - | - | 10 |
| Microcystalline Wax A | - | 5 | - | - | - | - | - | 10 | |
| Mono-diglycerid | 10 | - | - | - | - | - | - | - | |
| Hydrogenated | | | | | | | | | |
| vegetable oil | - | - | - | 12 | - | - | 10 | - | |
| Acetylated mono- | | | | | | | | | |
| diglycerid 33 | - | - | - | - | 12 | - | - | - | |
| **Elastomer** | | | | | | | | | |
| Butyl | 10 | 10 | 10 | 10 | 10 | 10 | 10 | 10 | 10 |
| Polyisobutylen | - | - | - | - | - | - | 5 | 5 | 5 |
| **Other** | | | | | | | | | |
| Talc | 5 | 5 | 5 | 5 | 5 | 5 | 3 | 5 | 5 |

**Table 1.2: Encapsulated delivery system**

| **Batch no.** | **284** | **285** | **286** | **287** | **288** | **289** | **290** | **291** | **346** |
|---|---|---|---|---|---|---|---|---|---|
| **High intensity** | | | | | | | | | |
| **sweetner** | | | | | | | | | |
| Acesulfame -K | 30 | 30 | 30 | 30 | 30 | 30 | 30 | 30 | 30 |
| **Encaps. Material** | | | | | | | | | |
| **Resin** | | | | | | | | | |
| Piccolyte C85 | - | - | - | - | - | - | - | - | 52.5 |
| Piccolyte C115 | 50 | 24 | 24 | 48 | - | 50 | 50 | - | - |
| PVAc high Mw | - | 24 | 24 | - | 48 | - | - | 50 | - |
| | | | | | | | | | |
| **Softening system** | | | | | | | | | |
| Triacetin | - | - | 7 | 7 | 7 | - | - | - | - |
| Microcrystallic wax B | - | 7 | - | - | - | - | - | - | 7.5 |
| Hydrogenated | | | | | | | | | |
| vegetable oil | 5 | - | - | - | - | - | - | - | - |
| Hydrogenated | | | | | | | | | |
| Rapeseed oil | - | - | - | - | - | 5 | | | - |
| Carnaubawax | - | - | - | - | - | - | 5 | 5 | - |
| | | | | | | | | | |
| **Elastomer** | | | | | | | | | |
| Butyl | 10 | 10 | 10 | 10 | 10 | 10 | 10 | 10 | 10 |
| Polyisobutylen | | | | | | | | | |
| Other | | | | | | | | | |
| Talc | 5 | 5 | 5 | 5 | 5 | 5 | 5 | 5 | 5 |

**Table 1.3: Encapsulated delivery system**

| **Batch no.** | **347** | **367** | **368** | **369** | **370** | **371** | **372** | **373** | **374** |
|---|---|---|---|---|---|---|---|---|---|
| **High intensity** | | | | | | | | | |
| **sweetener** | | | | | | | | | |
| Acesulfame - K | 30 | 30 | 30 | 30 | 30 | 30 | 30 | 30 | 30 |
| **Encaps. Material** | | | | | | | | | |
| **Resin** | | | | | | | | | |
| Piccolyte C85 | - | - | - | - | - | - | 45 | 23.75 | 50 |
| Piccolyte C115 | - | - | - | 45 | 23.75 | - | - | - | - |
| PVAc high Mw | 26.25 | 45 | 50 | - | 23.75 | 50 | - | 23.75 | - |
| PVAc low Mw | 26.25 | - | - | - | - | - | - | - | - |
| **Softening system** | | | | | | | | | |
| Microcystalline Wax B | 7.5 | 10 | 5 | 10 | 7.5 | 5 | 10 | 7.5 | 5 |
| **Elastomer** | | | | | | | | | |
| Butyl | 5 | 10 | 10 | 10 | 10 | 10 | 10 | 10 | 10 |
| **Other** | | | | | | | | | |
| Talc | 5 | 5 | 5 | 5 | 5 | 5 | 5 | 5 | 5 |

**Table 1.4: Encapsulated delivery system**

| **Batch no.** | **397** | **398** | **399** | **400** | **401** | **402** | **403** |
|---|---|---|---|---|---|---|---|
| **High intensity sweetener** | | | | | | | |
| Acesulfame - K | 30 | 30 | 30 | 30 | 30 | 30 | 30 |
| **Encaps. Material** | | | | | | | |
| **Resin** | | | | | | | |
| Piccolyte C85 | - | - | 30 | - | - | - | 20 |
| Piccolyte C115 | - | - | - | 30 | - | - | - |
| PVAc high Mw | 60 | 30 | 30 | 30 | - | 55 | 20 |
| PVAc low Mw | - | 30 | - | - | 60 | - | 20 |
| **Softening system** | | | | | | | |
| Microcystalline Wax B 60 | 10 | 10 | 10 | 10 | 10 | 10 | 10 |
| **Elastomer** | | | | | | | |
| Polyisobutylen | - | - | - | - | - | 5 | - |

**Table 1.5: Encapsulated delivery system**

| **Batch no.** | **718** | **719** | **720** | **721** | **722** | **723** | **724** | **725** | **726** |
|---|---|---|---|---|---|---|---|---|---|
| **High intensity** | | | | | | | | | |
| **Sweetener** | | | | | | | | | |
| **Acesulfame - K** | 30 | 30 | 15 | 15 | - | 30 | 15 | 10 | - |
| Aspartame | - | - | 15 | 15 | 30 | - | 15 | 20 | - |
| Sucralose | - | - | - | - | | - | - | - | 30 |
| | | | | | | | | | |
| **Encaps. Material** | | | | | | | | | |
| **Resin** | | | | | | | | | |
| Piccolyte C85 | 30 | - | 30 | - | 16.25 | 16.25 | 16.25 | 16.25 | 16.25 |
| PVAc high Mw | 35 | 65 | 35 | 65 | 48.75 | 48.75 | 48.75 | 48.75 | 48.75 |
| PVAc low Mw | | | | | | | | | |
| **Softening system** | | | | | | | | | |
| Microcystalline Wax B | 5 | 5 | 5 | 5 | 5 | 5 | 5 | 5 | 5 |

### Example 2: Preparation of chewing gum compositions

Different chewing gum compositions comprising the above described encapsulation delivery systems were prepared, including the standard composition with ground Acesulfame-K. In addition to the different combinations of high intensity sweetener, encapsulation materials and softening systems, different particle sizes of the encapsulation delivery system were tested.

All chewing gum compositions contained gum base, sorbitol (bulk sweetener), maltitol syrup, food acids, lemon flavour, and encapsulated high intensity sweetener delivery systems or ground high intensity sweeteners.

**Table 2.1: Simple chewing gum composition**

| **Raw material** | **Without encap. High intensity sweetner** | | **With encap. High intensity sweetner** |
|---|---|---|---|
| | **Content, % by weight** | | |
| Gum base | | 40 | 40 |
| Sorbitol | | 51.2 | 49.8 |
| Maltitol syrup | | 6 | 6 |
| Lemon flavour | | 1.5 | 1.5 |
| High intensity | | | |
| sweetner | | 0.7 | 2.3 |
| Malic acid | | 0.3 | 0.3 |
| Citric acid | | 0.3 | 0.3 |

In the standard composition (reference), i.e. batch 257, 349 and 422, the Acesulfame - K was added as non-encapsulated, ground high intensity sweetener, whereas the high intensity sweetener in the test compositions were added as encapsulated, ground high intensity sweetener, i.e. encapsulation delivery system. The theoretical amount of high intensity sweetener in the chewing gum composition was 0.7 % (W/W). In the present context, the theoretical value of 0.7 % (W/W) implies that the overall percentage of high intensity sweetener is 2.33 % (W/W) since the content of acid in the encapsulation is 30% (W/W).

The chewing gum compositions were prepared as follows. The chewing gum components were mixed in kneading kettles (mixers) with strong horizontally placed Z-shaped arms, which processes the raw materials and produces a homogeneous chewing gum mass.

The kneading kettles were heated to a temperature of approx. 45°C. The gum base and the bulk sweetener were mixed for about 6-7 minutes. Subsequently, Maltitol syrup were added and mixed, and after those food acids, lemon flavour and the encapsulated delivery system were added. The admixture was kneaded for 15 minutes.

After the kneading was completed, the chewing gum composition was taken out. After cooling, the chewing gum was formed by rolling and scoring into chewing gum centers (cores).

Tables 2.2 - 2.11 below show the combinations of high intensity sweeteners, particle size of the encapsulation delivery systems, and batch no. of the encapsulation delivery system (corresponding to the batch numbers in above tables 1.1-1.5) used different chewing gum compositions.

**Table 2.2: Chewing gum compositions**

| **Batch no.** | **257** | **258** | **259** | **260** | **261** | **262** | **263** | **264** |
|---|---|---|---|---|---|---|---|---|
| **Flavour High intensity sweetner** | Lemon | Lemon | Lemon | Lemon | Lemon | Lemon | Lemon | Lemon |
| **Acesulfame - K** | 0.30 | 1.00 | 1.00 | 1.00 | 1.00 | 1.00 | 1.00 | 1.00 |
| **Particle size,** | | 500- | 500- | 500- | 500- | 180- | 500- | 500- |
| **micron Batch no. Delivery** | | 1000 | 1000 | 1000 | 1000 | 1000 | 1000 | 1000 |
| **system** | **Ref.** | **234** | **235** | **236** | **237** | **237** | **238** | **239** |

**Table 2.3: Chewing gum compositions**

| **Batch no.** | **265** | **266** | **267** | **292** | **293** | **294** | **295** | **296** |
|---|---|---|---|---|---|---|---|---|
| **Flavour** | Lemon | Lemon | Lemon | Lemon | Lemon | Lemon | Lemon | Lemon |
| **High intensity sweetener** | | | | | | | | |
| Acesulfame - K | 1.00 500- | 1.00 500- | 1.00 500- | 1.00 500- | 1.00 500- | 1.00 500- | 1.00 500- | 1.00 500- |
| **Particle size Batch no. Delivery** | 1000 | 1000 | 1000 | 1000 | 1000 | 1000 | 1000 | 1000 |
| **system** | **240** | **241** | **242** | **284** | **285** | **286** | **287** | **288** |

**Table 2.4: Chewing gum compositions**

| **Batch no.** | **297** | **298** | **299** |
|---|---|---|---|
| **Flavour** | Lemon | Lemon | Lemon |
| **High intensity sweetener** | | | |
| | | | |
| Acesulfame - K | 1.00 | 1.00 | 1.00 |
| | 500- | 500- | 500- |
| **Particle size Batch no. Delivery** | 1000 | 1000 | 1000 |
| **system** | **289** | **290** | **291** |

**Table 2.5: Chewing gum compositions**

| **Batch no.** | **349** | **350** | **351** | **352** | **353** | **354** | **355** | **356** |
|---|---|---|---|---|---|---|---|---|
| **Flavour** | Lemon | Lemon | Lemon | Lemon | Lemon | Lemon | Lemon | Lemon |
| **High intensity sweetener** | | | | | | | | |
| Acesulfame - K | 0.70 | 2.33 | 2.33 | 2.33 | 2.33 | 2.33 | 2.33 | 2.33 |
| | 500- | 500- | 500- | 500- | 500- | 500- | 500- | 500- |
| **Particle size Batch no. Delivery** | 1000 | 1000 | 1000 | 1000 | 1000 | 1000 | 1000 | 1000 |
| **system** | **Ref.** | **234** | **235** | **236** | **237** | **238** | **239** | **240** |

**Table 2.6 Chewing gum composition**

| **Batch no.** | **357** | **358** | **359** | **360** | **361** | **362** | **363** | **364** |
|---|---|---|---|---|---|---|---|---|
| **Flavour** | Lemon | Lemon | Lemon | Lemon | Lemon | Lemon | Lemon | Lemon |
| **High intensity sweetener** | | | | | | | | |
| Acesulfame - K | 2.33 500- | 2.33 500- | 2.33 500- | 2.33 500- | 2.33 500- | 2.33 500- | 2.33 500- | 2.33 500- |
| **Particle size Batch no. Delivery** | 1000 | 1000 | 1000 | 1000 | 1000 | 1000 | 1000 | 1000 |
| **system** | **241** | **242** | **284** | **285** | **287** | **289** | **290** | **291** |

**Table 2.7 Chewing gum composition**

| **Batch no.** | **365** | **366** | **375** | **376** | **377** | **378** | **379** | **380** |
|---|---|---|---|---|---|---|---|---|
| **Flavour** | Lemon | Lemon | Lemon | Lemon | Lemon | Lemon | Lemon | Lemon |
| **High intensity sweetener** | | | | | | | | |
| Acesulfame - K | 2.33 | 2.33 | 2.33 | 2.33 | 2.33 | 2.33 | 2.33 | 2.33 |
| | 500- | 500- | 180- | 180- | 180- | 180- | 180- | 180- |
| **Particle size Batch no. Delivery** | 1000 | 1000 | 1000 | 1000 | 1000 | 1000 | 1000 | 1000 |
| **system** | **346** | **347** | **367** | **368** | **369** | **370** | **371** | **372** |

**Table 2.8 Chewing gum composition**

| **Batch no.** | **381** | **382** | **409** | **410** | **411** | **412** | **413** | **414** |
|---|---|---|---|---|---|---|---|---|
| **Flavour** | Lemon | Lemon | Lemon | Lemon | Lemon | Lemon | Lemon | Lemon |
| **High intensity sweetener** | | | | | | | | |
| Acesulfame - K | 2.33 | 2.33 | 2.33 | 2.33 | 2.33 | 2.33 | 2.33 | 2.33 |
| | 180- | 180- | 500- | 500- | 500- | 500- | 500- | 500- |
| **Particle size Batch no. Delivery** | 1000 | 1000 | 1000 | 1000 | 1000 | 1000 | 1000 | 1000 |
| system | 373 | 374 | 397 | 398 | 399 | 400 | 401 | 402 |

**Table 2.9 Chewing gum composition**

| **Batch no.** | **415** | **421** | **422** | **423** | **424** | **425** | **426** | **427** |
|---|---|---|---|---|---|---|---|---|
| **Flavour** | Lemon | Lemon | Pep. | Pep. | Pep. | Pep. | Pep. | Pep. |
| **High intensity sweetener** | | | | | | | | |
| Acesulfame - K | 2.33 | 0.70 | 0.70 | 2.33 | 2.33 | 2.33 | 2.33 | 2.33 |
| | 180- | | | 180- | 500- | 500- | 180- | 500- |
| **Particle size Batch no. Delivery** | 1000 | - | - | 1000 | 1000 | 1000 | 1000 | 1000 |
| **system** | **403** | **Ref.** | **Ref.** | **368** | **347** | **403** | **373** | **399** |

**Table 2.10 Chewing gum composition**

| **Batch no.** | **428** | **429** | **430** | **431** | **434** | **435** | **436** | **437** |
|---|---|---|---|---|---|---|---|---|
| **Flavour** | Pep. | Pep. | Pep. | Pep. | Lemon | Lemon | Lemon | Lemon |
| **High intensity sweetener** | | | | | | | | |
| Aspartame | - | - | - | - | 0.35 | 1.17 | - | 1.17 |
| Acesulfame - K Acesulfame - K : | 2.33 | 0.70 | - | - | 0.35 | 1.17 | - | 1.17 |
| Aspartame 1:1 | - | - | 2.33 | 2.33 | - | - | 2.33 | - |
| | 180- | | 500- | 180- | 500- | 500- | 180- | 500- |
| **Particle size** | 1000 | - | 1000 | 1000 | 1000 | 1000 | 1000 | 1000 |
| **Batch no. Delivery** | | | | | | 722+ | | 722+ |
| **system** | **718** | **719** | **720** | **721** | **Ref.** | **723** | **724** | **723** |

**Table 2.11 Chewing gum composition**

| **Batch no.** | **438** | **439** | **440** | **441** |
|---|---|---|---|---|
| **Flavour** | Lemon | Lemon | Lemon | Lemon |
| **High intensity sweetener** | | | | |
| Aspartame | 0.47 | - | - | - |
| Acesulfame - K | 0.23 | - | - | - |
| Acesulfame - K:Aspartame 1:2 | - | 2.33 | - | - |
| Sucralose | - | - | 0.35 | 1.17 |
| **Particle size,** | | 500- | | 500- |
| **micron Batch no. Delivery** | - | 1000 | - | 1000 |
| **system** | **Ref.** | **725** | **Ref.** | **726** |

### Example 3: Release experiments and analysis

### 3.1 HPLC analysis

The above chewing gum compositions were examined for release of sweetener in vivo. Two healthy, non smoking test persons, chewed one chewing gum composition for 0, 3, 6,10 and 15 minutes. The test persons were not allowed to drink or eat for 10 minutes prior to chewing and during chewing. The test persons were instructed to chew once pr. second and had a watch for their disposal during the chew test. The rest amount high intensity sweetener in the chewing gum was quantitatively analyzed by use of HPLC. The percentage release high intensity sweetener was calculated.

### 3.2 Sensory evaluation (Time Intensity test)

### Time-Intensity, Test procedure:

**Aim:** The aim of a time-intensity test is to describe a product in detail with regard to sweetness. The intensities of the sweetness are evaluated semi-continuously (i.e. typically with an interval of 15-25 seconds).

**Panel training and calibration:** Panel training involves intensity training with regard to the chosen attributes using a 15 cm uni-polar unstructured scale with anchor points 10% from each end of the scale. With regard to references, preferably gums with extreme characteristics (either max or min) with regard to sweetness are applied to help the panel comprehend/recognize the sweetness intensity. In certain cases, other substances can be applied, e.g. chemical solutions or foodstuff. Discussion of the intensities takes place and the assessors preferably come to a consensus. The objective behind the set-up is unknown for the panel.

**Test set-up:** A panel leader sets up the tailor-made test.

### Testing protocol of a Sensory Profiling

A sensory profiling is typically performed using 8-12 external trained assessors. Testing is performed in booths with daylight bulbs and a computer with the Fizz® for Windows version 2.10 A, copyright© 1994-2005 BIOSYSTEMES, France as data acquisition tool.

One piece of chewing gum is tested at a time, and samples marked with a three-digit code are served in a balanced order. The samples are evaluated semi-continuously (typically 15-25 seconds interval) with respect to the sweetness intensity. The intensity scale is the 15 cm uni-polar unstructured scale.

There is a 3-min break between two samples and approx. a 10 min break after two or three samples depending on the gum strength having influence on the sensory fatigue. The assessors clean their pallets between every sample with tasteless biscuits, cucumber, thin hibiscus tea, room-temperature diluted cocoa milk and water.

The samples are tested for 10-30 min and all samples are replicated. The same panel typically evaluates all replicates.

### Analysis

If the assessor performance is accepted, the results are subjected to further analysis. In tests, containing less than 8-10 samples, the analysis is based on the ANOVA using Duncan 5% level to discriminate the products. Mean results and level of significance are illustrated in graphs and tables. In tests containing more than 8-10 samples, ANOVA is supplemented with multivariate analysis in order to obtain a clearer overview of the differences and similarities between samples.

### Example 4: Effect of softener system

In this example a softening system was incorporated in the encapsulation acid delivery system, in particular to provide a better mouth feel of the final chewing gum.

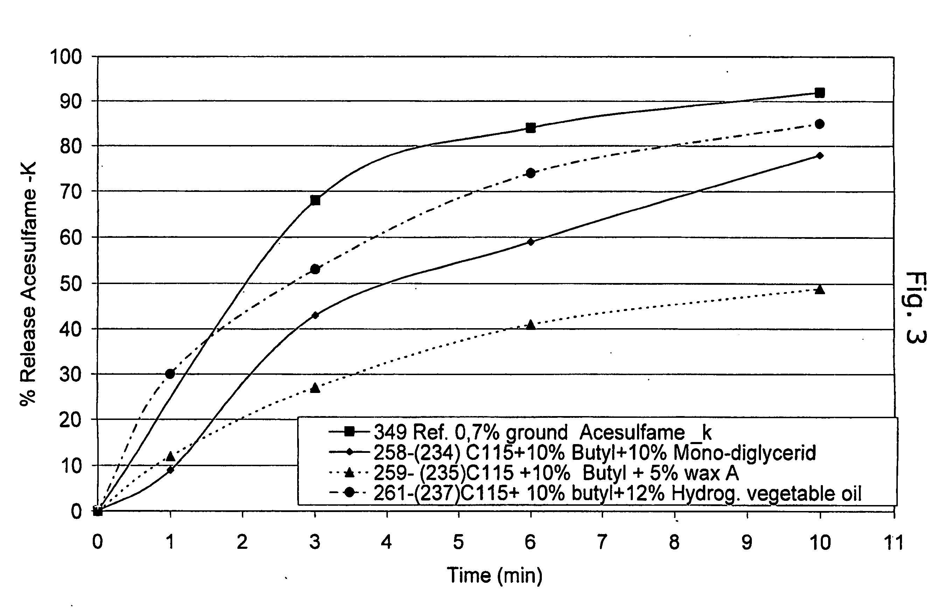

Table 4.1 and Fig.3 show the effect of different softening systems.

All encapsulations were made with Piccolyte® C115 and 10% (W/W) elastomer.

**Table 4.1: In vivo chew out studies, % Release of Acesulfame-K, different softening system, Piccolyte ®C115. HPLC analysis**

| **Chewing gum** | **Softener** | | | | | |
|---|---|---|---|---|---|---|
| **No.** | **Encapsulated delivery system** | **0 min** | **1 min** | **3 min** | **6 min** | **10 min** |
| 349 | Std. ground Acesulfame - K | 0 | | 68 | 84 | 92 |
| 258 | 10% Mono-diglycerid (234) | 0 | 9 | 43 | 59 | 78 |
| 259 | 5% Wax A (235) | 0 | 12 | 27 | 41 | 49 |
| 260 | 7% Wax B (236) | 0 | | 18 | 41 | 48 |
| 261 | 12% Hydrogenated vegetable oil (237) | 0 | 30 | 53 | 74 | 85 |
| 263 | 12% Acetylated Mono-diglycerid (238) | 0 | 25 | 56 | 71 | 83 |
| 295 | 7% Triacetin (287) | 0 | 37 | 63 | 83 | 88 |
| 297 | 5% Hydrogenated rapeseed oil (289) | 0 | 9 | 44 | 51 | 55 |
| 298 | 5% Carnaubawax (290) | 0 | 31 | 46 | 54 | 60 |

As disclosed in Table 4.1 and Fig 3, the release of Acesulfame-K is dependent on the softening system. After 10 minutes of chewing, sample no. 259 and 260 (encapsulated delivery system batch no. 235 and 236) released about 50% of the sweetener whereas the release of sweetener where mono-diglycerid was present was about 80% after 10 minutes of chewing.

### Example 5: Effect of polyterpene resins alone and in combination with PVAc.

Different molecular weigh of polyterpene resins were tested alone or in combination with PVAc in the presence of 5-10 % Wax B (softening system) and for some of the samples butyl rubber.

**Table 5.1: In vivo chew out studies, % Release of Acesulfame-K, different resin systems, Wax B as a softener. HPLC analysis**

| **Chewing gum No.** | **Resins combination** | **Chew out min.** | | | | |
|---|---|---|---|---|---|---|
| | | **0** | **3** | **6** | **10** | **15** |
| 349 | Std. ground Acesulfame-K | 0 | 68 | 84 | 92 | 97 |
| 355 | PVAc + 10% Butyl + 7% Wax B (239) | 0 | 26 | 42 | 66 | 76 |
| 366 | PVAc high Mw : Low Mw 1:1 (347) | 0 | 27 | 44 | 57 | 87 |
| 375 | PVAc high Mw + 10% Butyl (367) | 0 | 27 | 27 | 51 | 77 |
| 378 | C115 : PVAc high Mw 1:1 + 10% butyl | 0 | 24 | 40 | 51 | 84 |
| | (370) | | | | | |
| 381 | C85:PVAc high Mw 1:1 + 10% Butyl (373) | 0 | 13 | 20 | 26 | 53 |
| 412 | C115:PVAc high Mw 1:1 (400) | 0 | 21 | 32 | 42 | 65 |
| 414 | PVAc high Mw + 5 % PIB (402) | 0 | 17 | 30 | 46 | 57 |
| 415 | C85:PVAc high Mw: PVAc low Mw 1:1:1 | 0 | 5 | 13 | 49 | 74 |
| | (403) | | | | | |

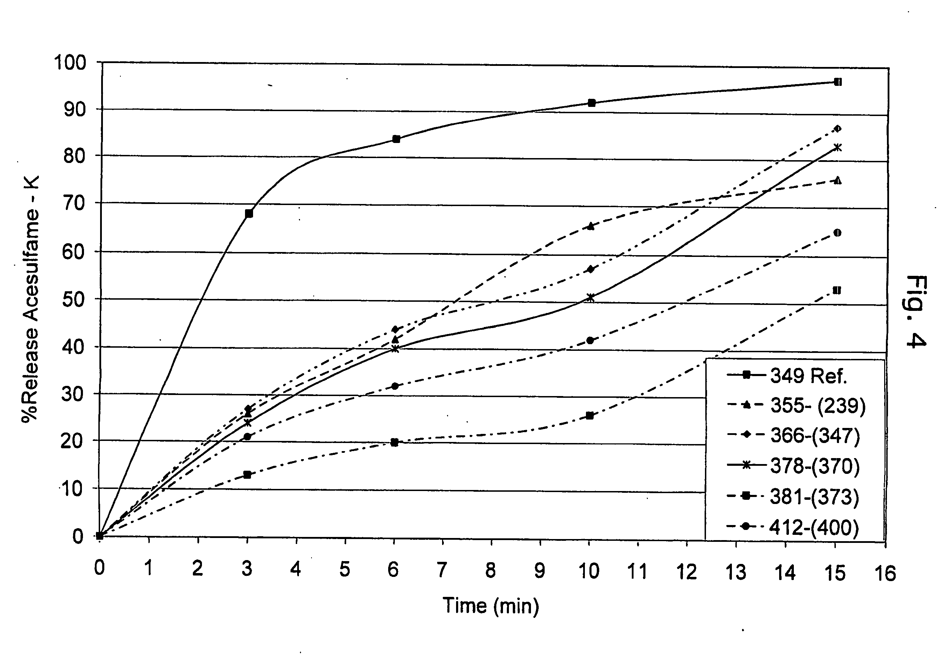

As disclosed in Table 5.1 and Fig. 4, the release of Acesulfame-K is in particular delayed for the combination of PVAc with Piccolyte® C85 or Piccolyte® C115 after 10 and 15 minutes with the particular softening system with or without elastomer.

### Example 6 Sensory evaluation. Time Intensity test

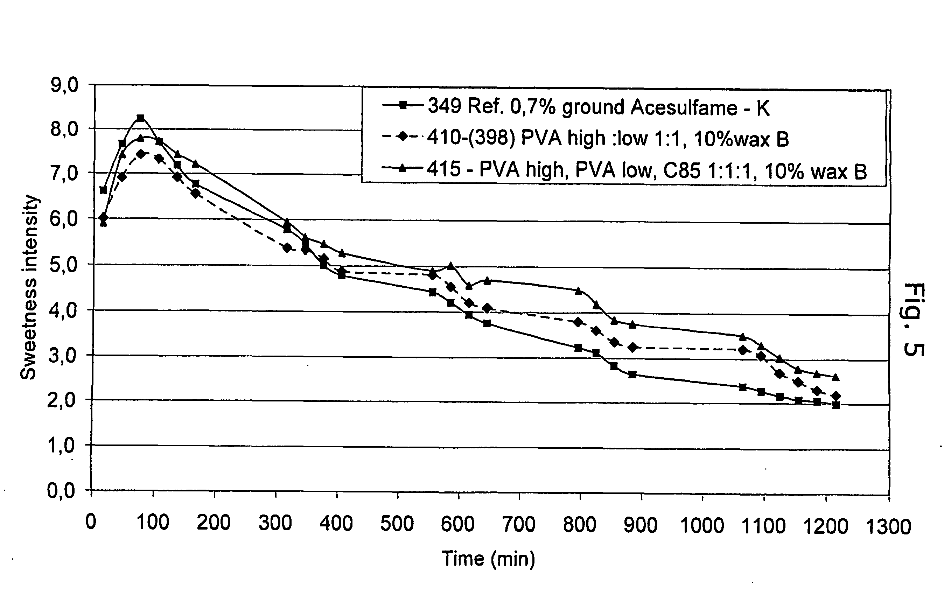

The results of a sensory evaluation of chewing gum 349, 410, and 415 are presented in Table 6.1 and in Fig. 5. Chewing gum 410 contains delivery system No. 398 which comprises high intensity sweetener encapsulated in a combination of PVAc having high and low molecular weight and wax. Chewing gum 415 contains delivery system No. 403 which comprises high intensity sweetener encapsulated in a combination polyterpene resin, PVAc having both high and low molecular weight, and wax.

**Table 6.1 Sweetness intensity as a function of time. The numbers in brackets refer to the used delivery systems.**

| **Time (sec.)** | **Sweetness of chewing gum no.** | | |
|---|---|---|---|
| | **349 Ref.** | **410-(398)** | **415-(403)** |
| 15 | 6.6 | 6.0 | 5.9 |
| 45 | 7.7 | 6.9 | 7.4 |
| 75 | 8.2 | 7.4 | 7.8 |
| 105 | 7.7 | 7.3 | 7.7 |
| 135 | 7.2 | 6.9 | 7.4 |
| 165 | 6.8 | 6.6 | 7.2 |
| 315 | 5.8 | 5.4 | 6.0 |
| 345 | 5.5 | 5.3 | 5.6 |
| 375 | 5.0 | 5.2 | 5.5 |
| 405 | 4.8 | 4.9 | 5.3 |
| 555 | 4.4 | 4.8 | 4.9 |
| 585 | 4.2 | 4.6 | 5.0 |
| 615 | 4.0 | 4.2 | 4.6 |
| 645 | 3.8 | 4.1 | 4.7 |
| 795 | 3.2 | 3.8 | 4.5 |
| 825 | 3.1 | 3.6 | 4.2 |
| 855 | 2.8 | 3.4 | 3.9 |
| 885 | 2.6 | 3.3 | 3.8 |
| 1065 | 2.4 | 3.2 | 3.5 |
| 1095 | 2.3 | 3.1 | 3.3 |
| 1125 | 2.2 | 2.7 | 3.0 |
| 1155 | 2.1 | 2.5 | 2.8 |
| 1185 | 2.1 | 2.3 | 2.7 |
| 1215 | 2.0 | 2.2 | 2.6 |

### Example 7 Sensory evaluation. Time Intensity test

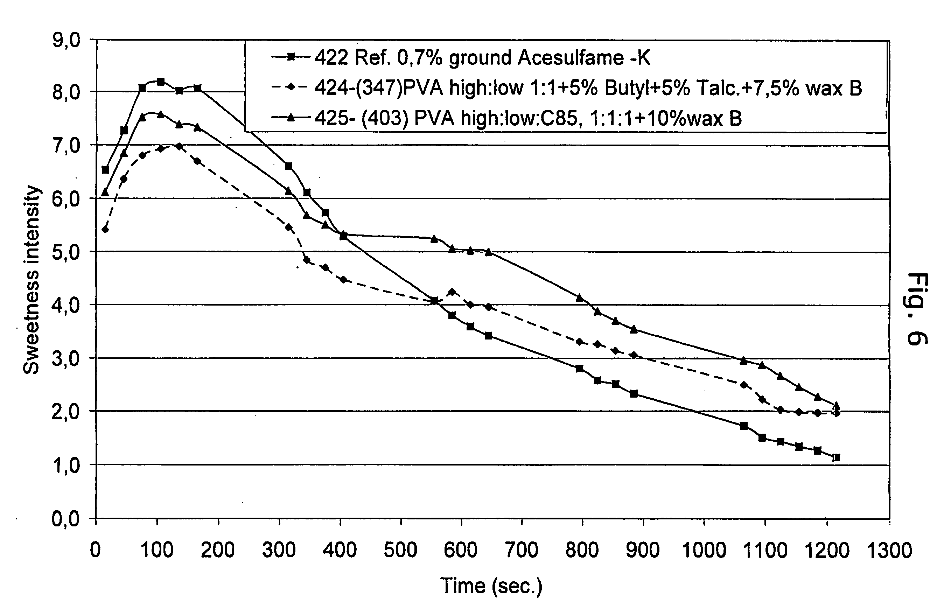

The results of a sensory evaluation of chewing gum 422, 424, and 425 are presented in Table 7.1 and in Fig. 6. Chewing gum 424 contains delivery system No. 347 which comprises high intensity sweetener encapsulated in a combination of PVAc having high and low molecular weight, wax, and elastomer. Chewing gum 425 contains delivery system No. 403 which comprises high intensity sweetener encapsulated in a combination polyterpene resin, PVAc having both high and low molecular weight, and wax.

**Table 7.1 Sweetness intensity as a function of time. The numbers in brackets refer to the used delivery systems.**

| **Time (sec.)** | **Sweetness of chewing gum no.** | | |
|---|---|---|---|
| | **422 Ref.** | **424-(347)** | **425-(403)** |
| 15 | 6.5 | 5.4 | 6.1 |
| 45 | 7.3 | 6.4 | 6.9 |
| 75 | 8.1 | 6.8 | 7.5 |
| 105 | 8.2 | 6.9 | 7.6 |
| 135 | 8.0 | 7.0 | 7.4 |
| 165 | 8.1 | 6.7 | 7.3 |
| 315 | 6.6 | 5.5 | 6.1 |
| 345 | 6.1 | 4.9 | 5.7 |
| 375 | 5.7 | 4.7 | 5.5 |
| 405 | 5.3 | 4.5 | 5.3 |
| 555 | 4.1 | 4.1 | 5.3 |
| 585 | 3.8 | 4.2 | 5.1 |
| 615 | 3.6 | 4.0 | 5.0 |
| 645 | 3.4 | 4.0 | 5.0 |
| 795 | 2.8 | 3.3 | 4.1 |
| 825 | 2.6 | 3.3 | 3.9 |
| 855 | 2.5 | 3.1 | 3.7 |
| 885 | 2.3 | 3.1 | 3.6 |
| 1065 | 1.7 | 2.5 | 3.0 |
| 1095 | 1.5 | 2.2 | 2.9 |
| 1125 | 1.4 | 2.0 | 2.7 |
| 1155 | 1.4 | 2.0 | 2.5 |
| 1185 | 1.3 | 2.0 | 2.3 |
| 1215 | 1.2 | 2.0 | 2.1 |

### Example 8 Sensory evaluation. Time Intensity test

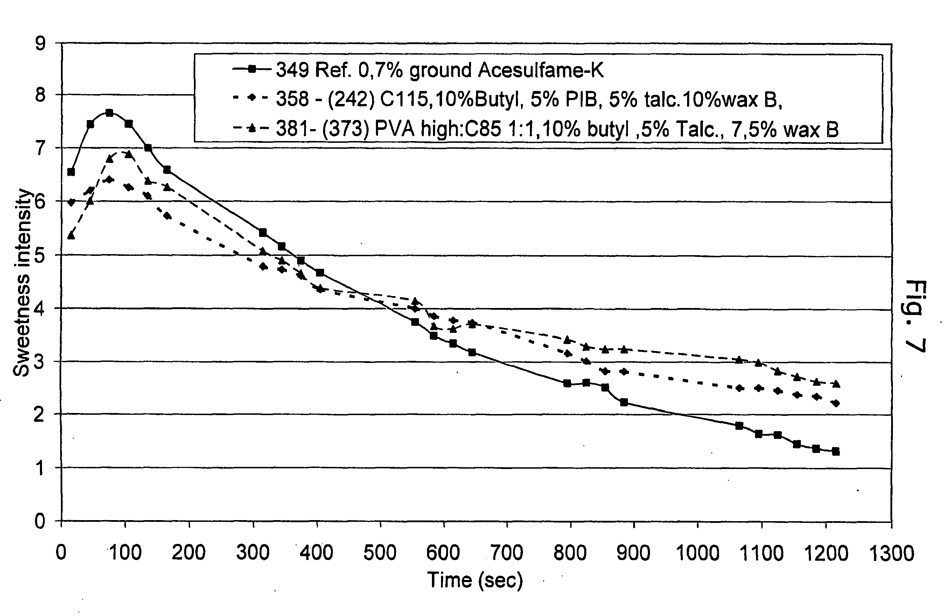

The results of a sensory evaluation of chewing gum 349, 358, and 381 are presented in Table 8.1 and in Fig. 7. Chewing gum 358 contains delivery system No. 242 which comprises high intensity sweetener encapsulated in polyterpene, wax, and elastomer. Chewing gum 381 contains delivery system No. 373 which comprises high intensity sweetener encapsulated in polyterpene resin, a high molecular weight PVAc, wax, and elastomer.

**Table 8.1 Sweetness intensity as a function of time. The numbers in brackets refer to the used delivery systems.**

| **Time (Sec.)** | **Sweetness of chewing gum no.** | | |
|---|---|---|---|
| | **349 Ref.** | **358-(242)** | **381-(373)** |
| 15 | 6.5 | 6.0 | 5.4 |
| 45 | 7.4 | 6.2 | 6.0 |
| 75 | 7.7 | 6.4 | 6.8 |
| 105 | 7.5 | 6.3 | 6.9 |
| 135 | 7.0 | 6.1 | 6.4 |
| 165 | 6.6 | 5.7 | 6.3 |
| 315 | 5.4 | 4.8 | 5.1 |
| 345 | 5.2 | 4.7 | 4.9 |
| 375 | 4.9 | 4.6 | 4.7 |
| 405 | 4.7 | 4.4 | 4.4 |
| 555 | 3.8 | 4.0 | 4.1 |
| 585 | 3.5 | 3.9 | 3.7 |
| 615 | 3.3 | 3.8 | 3.6 |
| 645 | 3.2 | 3.7 | 3.7 |
| 795 | 2.6 | 3.2 | 3.4 |
| 825 | 2.6 | 3.0 | 3.3 |
| 855 | 2.5 | 2.8 | 3.2 |
| 885 | 2.2 | 2.8 | 3.2 |
| 1065 | 1.8 | 2.5 | 3.1 |
| 1095 | 1.6 | 2.5 | 3.0 |
| 1125 | 1.6 | 2.5 | 2.8 |
| 1155 | 1.5 | 2.4 | 2.7 |
| 1185 | 1.4 | 2.3 | 2.6 |
| 1215 | 1.3 | 2.2 | 2.6 |

## Claims

1. A chewable confectionary composition having modified release, said composition comprising
- a confectionary base,
- at least one confectionary ingredient, and
- one or more encapsulation delivery systems comprising at least one high intensity sweetener, at least one polyvinyl acetate and at least one natural resin,
wherein said one or more encapsulation delivery systems comprises a total amount of natural resin in the range of 5-60% by weight.

2. The confectionary system according to claim 1, wherein the one or more encapsulation delivery systems is a particulate system.

3. The confectionary composition according to any of the preceding claims, wherein the at least one natural resin comprised in the one or more encapsulation delivery systems comprises at least one polyterpene resin.

4. The confectionary composition according to any of the preceding claims, wherein the at least one natural resin comprised in the one or more encapsulation delivery systems comprises at least one hydrogenated resin.

5. The confectionary composition according to any of the preceding claims, wherein the at least one natural resin comprised in the one or more encapsulation delivery systems comprises at least one polymerised resin.

6. The confectionary composition according to any of the preceding claims, wherein the at least one polyvinyl acetate has a molar weight (M_{w}) in the range of 5,000-40,000 g/mol.

7. The confectionary composition according to any of the preceding claims, wherein the at least one polyvinyl acetate has a molar weight (M_{w}) in the range of 40,000-100,000 g/mol.

8. The confectionary composition according to any of the preceding claims, wherein the one or more encapsulation delivery systems comprises a first polyvinyl acetate having a molar weight (M_{w}) in the range of 5,000-40,000 g/mol and a second polyvinyl acetate having a molar weight (M_{w}) in the range of 40,000-100,000 g/mol.

9. The confectionary system according to any of the preceding claims, wherein the one or more encapsulation delivery systems comprises 10-90% by weight of polyvinyl acetate.

10. The confectionary composition according to any of the preceding claims, wherein the at least one high intensity sweetener is selected from the group consisting of sucralose, neotame, NEPH, aspartame, salts of acesulfame (acesulfame-K), alitame, saccharin and its salts, cyclamic acid and its salts, glycyrrhizin, dihydrochalcones, thaumatin, monellin, stevioside, and mixtures thereof.

11. The confectionary composition according to any of the preceding claims, wherein the average particle size of the at least one high intensity sweetener is in the range of 1-50 µm.

12. The confectionary composition according to any of the preceding claims, wherein the one or more encapsulation delivery systems comprises an amount of the at least one high intensity sweetener in the range of 20-40% by weight.

13. The confectionary composition according to any of the preceding claims, wherein the one or more encapsulation delivery systems further comprises at least one texture modifying agent.

14. A confectionary encapsulation delivery system comprising at least one high intensity sweetener, at least one polyvinyl acetate and at least one natural resin, wherein said encapsulation delivery system comprises a total amount of natural resin in the range of 5-60% by weight.

15. The encapsulation delivery system according to claim 14, wherein the encapsulation delivery system is as defined in any of claims 2-13.

## Patentansprüche

1. Kaubare Süßwarenzusammensetzung mit modifizierter Freisetzung, wobei die Zusammensetzung umfasst
- eine Süßwarenbasis,
- mindestens einen Süßwarenbestandteil und
- ein oder mehrere Verkapselungsabgabensysteme, umfassend mindestens einen Süßstoff mit erhöhter Süßkraft, mindestens ein Polyvinylacetat und mindestens ein natürliches Harz,
wobei das eine Verkapselungsabgabensystem oder die mehreren Verkapselungsabgabensysteme eine Gesamtmenge an natürlichem Harz im Bereich 5-60 Gew.-% umfassen.

2. Süßwarensystem nach Anspruch 1, wobei das eine Verkapselungsabgabensystem oder die mehreren Verkapselungsabgabensysteme ein teilchenförmiges System sind.

3. Süßwarensystem nach einem der vorhergehenden Ansprüche, wobei das mindestens eine natürliche Harz in dem einen Verkapselungsabgabensystem oder den mehreren Verkapselungsabgabensystemen mindestens ein Polyterpenharz umfasst.

4. Süßwarensystem nach einem der vorhergehenden Ansprüche, wobei das mindestens eine natürliche Harz in dem einen Verkapselungsabgabensystem oder den mehreren Verkapselungsabgabensystemen mindestens ein gehärtetes Harz umfasst.

5. Süßwarensystem nach einem der vorhergehenden Ansprüche, wobei das mindestens eine natürliche Harz in dem einen Verkapselungsabgabensystem oder den mehreren Verkapselungsabgabensystemen mindestens ein polymerisiertes Harz umfasst.

6. Süßwarensystem nach einem der vorhergehenden Ansprüche, wobei das mindestens eine Polyvinylacetat ein Molgewicht (M_{w}) im Bereich 5.000-40.000 g/Mol hat.

7. Süßwarensystem nach einem der vorhergehenden Ansprüche, wobei das mindestens eine Polyvinylacetat ein Molgewicht (M_{w}) im Bereich 40.000-100.000 g/Mol hat.

8. Süßwarensystem nach einem der vorhergehenden Ansprüche, wobei das eine Verkapselungsabgabensystem oder die mehreren Verkapselungsabgabensysteme ein erstes Polyvinylacetat mit einem Molgewicht (M_{w}) im Bereich 5.000-40.000 g/Mol und ein zweites Polyvinylacetat mit einem Molgewicht (M_{w}) im Bereich 40.000-100.000 g/Mol umfassen.

9. Süßwarensystem nach einem der vorhergehenden Ansprüche, wobei das eine Verkapselungsabgabensystem oder die mehreren Verkapselungsabgabensysteme 10-90 Gew.-% Polyvinylacetat umfassen.

10. Süßwarensystem nach einem der vorhergehenden Ansprüche, wobei der mindestens eine Süßstoff mit erhöhter Süßkraft ausgewählt ist aus der Gruppe bestehend aus Sucralose, Neotam, NEPH, Aspartam, Salzen von Acesulfam (Acesulfam-K), Alitam, Saccharose und ihren Salzen, Cyclohexansulfaminsäure und ihren Salzen, Glycyrrhizin, Dihydrochalkonen, Thaumatin, Monellin, Steviosid und Mischungen davon.

11. Süßwarensystem nach einem der vorhergehenden Ansprüche, wobei die durchschnittliche Teilchengröße des mindestens einen Süßstoffs mit erhöhter Süßkraft im Bereich 1-50 µm liegt.

12. Süßwarensystem nach einem der vorhergehenden Ansprüche, wobei das eine Verkapselungsabgabensystem oder die mehreren Verkapselungsabgabensysteme eine Menge des mindestens einen Süßstoff mit erhöhter Süßkraft im Bereich 20-40 Gew.-% umfassen.

13. Süßwarensystem nach einem der vorhergehenden Ansprüche, wobei das eine Verkapselungsabgabensystem oder die mehreren Verkapselungsabgabensysteme weiterhin mindestens ein die Textur modifizierendes Mittel umfassen.

14. Verkapselungsabgabensystem für Süßwaren, umfassend mindestens einen Süßstoff mit hoher Süßkraft, mindestens ein Polyvinylacetat und mindestens ein natürliches Harz,
wobei das Verkapselungsabgabensystem eine Gesamtmenge an natürlichem Harz im Bereich 5-60 Gew.-% umfasst.

15. Verkapselungsabgabensystem nach Anspruch 14, wobei das Verkapselungsabgabensystem wie in Anspruch 2-13 festgelegt ist.

## Revendications

1. Composition de confiserie à mâcher à libération modifiée, ladite composition comprenant
- une base de confiserie,
- au moins un ingrédient de confiserie, et
- un ou plusieurs systèmes de libération par encapsulation comprenant au moins un édulcorant intense, au moins un acétate de polyvinyle et au moins une résine naturelle,
dans laquelle ledit un ou plusieurs systèmes de libération par encapsulation comprend une quantité totale de résine naturelle comprise dans une plage de 5 à 60 % en poids.

2. Le système de confiserie selon la revendication 1, dans lequel l'un ou plusieurs systèmes de libération par encapsulation est un système particulaire.

3. La composition de confiserie selon l'une quelconque des revendications précédentes, dans laquelle l'au moins une résine naturelle comprise dans l'un ou plusieurs systèmes de libération par encapsulation comprend au moins une résine polyterpène.

4. La composition de confiserie selon l'une quelconque des revendications précédentes, dans laquelle l'au moins une résine naturelle comprise dans l'un ou plusieurs systèmes de libération par encapsulation comprend au moins une résine hydrogénée.

5. La composition de confiserie selon l'une quelconque des revendications précédentes, dans laquelle l'au moins une résine naturelle comprise dans l'un ou plusieurs systèmes de libération par encapsulation comprend au moins une résine polymérisée.

6. La composition de confiserie selon l'une quelconque des revendications précédentes, dans laquelle l'au moins un acétate de polyvinyle possède une masse molaire (M_{w}) comprise dans une plage de 5 000 à 40 000 g/mol.

7. La composition de confiserie selon l'une quelconque des revendications précédentes, dans laquelle l'au moins un acétate de polyvinyle possède une masse molaire (M_{w}) comprise dans une plage de 40 000 à 100 000 g/mol.

8. La composition de confiserie selon l'une quelconque des revendications précédentes, dans laquelle l'un ou plusieurs systèmes de libération par encapsulation comprend un premier acétate de polyvinyle possédant une masse molaire (M_{w}) comprise dans une plage de 5 000 à 40 000 g/mol et un deuxième acétate de polyvinyle possédant une masse molaire (M_{w}) comprise dans une plage de 40 000 à 100 000 g/mol.

9. Le système de confiserie selon l'une quelconque des revendications précédentes, dans lequel l'un ou plusieurs systèmes de libération par encapsulation comprend 10 à 90 % en poids d'acétate de polyvinyle.

10. La composition de confiserie selon l'une quelconque des revendications précédentes, dans laquelle l'au moins un édulcorant intense est choisi dans le groupe consistant en sucralose, néotame, NEPH, aspartame, sels d'acésulfame (acésulfame K), alitame, saccharine et ses sels, acide cyclamique et ses sels, glycyrrhizine, dihydrochalcones, thaumatine, monelline, stévioside et mélanges de ceux-ci.

11. La composition de confiserie selon l'une quelconque des revendications précédentes, dans laquelle la granulométrie moyenne de l'au moins un édulcorant intense est comprise dans une plage de 1 à 50 µm.

12. La composition de confiserie selon l'une quelconque des revendications précédentes, dans laquelle l'un ou plusieurs systèmes de libération par encapsulation comprend une quantité de l'au moins un édulcorant intense comprise dans une plage de 20 à 40 % en poids.

13. La composition de confiserie selon l'une quelconque des revendications précédentes, dans lequel l'un ou plusieurs systèmes de libération par encapsulation comprend aussi au moins un agent modificateur de texture.

14. Système de libération par encapsulation pour confiserie comprenant au moins un édulcorant intense, au moins un acétate de polyvinyle et au moins une résine naturelle, dans lequel ledit système de libération par encapsulation comprend une quantité totale de résine naturelle comprise dans une plage de 5 à 60 % en poids.

15. Le système de libération par encapsulation selon la revendication 14, dans lequel le système de libération par encapsulation est tel que défini dans l'une quelconque des revendications 2 à 13.
